# EUROPÄISCHE PATENTSCHRIFT

(11) **EP 1 487 895 B1**
(45) Veröffentlichungstag und Bekanntmachung des Hinweises auf die Patenterteilung: **02.08.2006**
(21) Anmeldenummer: 03744354.6
(22) Anmeldetag: 13.03.2003
(51) Int. Cl.: C08G 18/40, C08G 18/65, C08G 18/69, C09J 175/14

(54) **GRAFTPOLYOLE MIT BIMODALER TEILCHENGRÖSSENVERTEILUNG UND VERFAHREN ZUR HERSTELLUNG SOLCHER GRAFTPOLYOLE SOWIE DEREN VERWENDUNG ZUR HERSTELLUNG VON POLYURETHANEN**
GRAFT POLYOLS WITH A BIMODAL PARTICLE SIZE DISTRIBUTION AND METHOD FOR PRODUCING GRAFT POLYOLS OF THIS TYPE, IN ADDITION TO THE USE THEREOF FOR PRODUCING POLYURETHANES
POLYOLS GREFFES A REPARTITION GRANULOMETRIQUE BIMODALE, LEURS PROCEDES DE PRODUCTION ET LEUR UTILISATION POUR REALISER DES POLYURETHANNES

(30) Priorität: 15.03.2002 DE 10211669
(43) Veröffentlichungstag der Anmeldung: 22.12.2004
(73) Patentinhaber: BASF Aktiengesellschaft, 67056 Ludwigshafen (DE)
(72) Erfinder: ZASCHKE, Bernd, 01561 Schönfeld (DE); HOPPE, Andreas, 02991 Lauta (DE); SCHUSTER, Marita, 32351 Stemwede-Haldem (DE); WENZEL, Marion, 32351 Stemwede-Haldem (DE); WAGNER, Klaus, 49419 Wagenfeld (DE)
(86) Internationale Anmeldenummer: PCT/EP2003/002576
(87) Internationale Veröffentlichungsnummer: WO 2003/078496

(56) Entgegenhaltungen:
- WO-A-02/066533
- US-B1- 6 201 035
- US-B1- 6 355 760

## Beschreibung

Die Erfindung betrifft Graftpolyole mit bimodaler Teilchengrößenverteilung und Verfahren zur Herstellung solcher Graftpolyole sowie deren Verwendung zur Herstellung von Polyurethanen.

Graftpolyole, auch als Polymer Polyole bezeichnet, sind Dispersionen von Acrylnitril-Styren-Copolymeren in einem Polyetherol oder Polyesterol. Durch den Einsatz von Graftpolyolen bei der Herstellung von Pölyurethanschaumstoffen kann das Schäumverhalten, insbesondere das Zellöffnungsverhalten, positiv beeinflusst werden. Aufgrund der dispergierten Phase, der Feststoffe im Graftpolyol, kommt es zur Härteerhöhung der Polyurethanschäume im Vergleich zu Schäumen, hergestellt ohne Graftpolyole.

Graftpolyole werden durch radikalische Polymerisation der Monomere Acrylnitril, Styren sowie optionell weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.
Üblicherweise ist dies eine in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, analog den Angaben der deutschen Patentschriften 1111394, 1222669 (US 3304273, 3383351, 3523093), 1152536 (GB 1040452) und 1152537 (GB 987618).

Als Trägerpolyole kommen Verbindungen mit mindestens einer Hydroxylgruppen-Funktionalität von 2 bis 8, vorzugsweise 2 bis 6, und einem mittleren Molekulargewicht von 300 bis 8000, vorzugsweise von 300 bis 5000, zur Anwendung. Die Hydroxylzahl der Polyhydroxylverbindungen beträgt dabei in aller Regel 20 bis 160 und vorzugsweise 28 bis 70.

Graftpolyole werden in kontinuierlichen Verfahren, unter Einsatz von Rührkesseln mit kontinuierlichem Zu- und Ablauf; Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Beim Semi Batch Verfahren wird nur ein Teil der Rohstoffe, die Reaktorvorlage, im Reaktor vorgelegt. Die restlichen Rohstoffe werden in einem oder mehreren Dosierströmen während der Reaktion in den Reaktor überführt. Durch die Semi Batch Fahrweise kann der Reaktionsverlauf, wie die Abführung der Reaktionswärme und die Teilchenbildung, besser kontrolliert werden. Üblicherweise werden bei der Herstellung von Graftpolyolen im Semi Batch Verfahren die restlichen Rohstoffe innerhalb von 60 bis 300 Minuten in den Reaktor dosiert, woran sich eine 5 bis 45 minütige Nachreaktionszeit anschließt.
Die Verwendung von Graftpolyolen bei der Herstellung von Polyurethanen ist aufgrund der speziellen Eigenschaften der Graftpolyole für viele Einsatzgebiete, wie beispielsweise für die Polstermöbel- und Automobilindustrie, wünschenswert. Für diese Einsatzgebiete werden jedoch niedrigviskose Graftpolyole benötigt, die sich beim Einsatz in Polyurethansystemen durch ein gutes Zellöffnungsverhalten sowie Fließverhalten in der Schaumform auszeichnen.
Ein Großteil der auf dem Markt erhältlichen Graftpolyole weist eine breite Teilchengrößenverteilung auf. Die Teilchengrößenverteilungen dieser Graftpolyole besitzen bei der Darstellung mit der Methode der Lichtstreuungsuntersuchung teilweise eine Schulter, was auf eine Überlagerung von Peaks mit unterschiedlicher Teilchengröße hinweist (vgl. Bild 1).

Graftpolyole mit einer breiten Teilchengrößenverteilung werden üblicherweise in kontinuierlichen Verfahren (WO 00/5971, US 6013731, EP 0640633, US 5268418, EP 365986) hergestellt. Kommen zweistufige Verfahren zum Einsatz, kann eine der beiden Stufen auch ein Semi Batch Verfahren sein.

In EP-B-698628 wird ein Verfahren zur Herstellung von Graftpolyolen mit breiter Teilchengrößenverteilung beschrieben. Das charakteristische dieses Prozesses ist, dass in der Reaktionsvorlage neben einem Trägerpolyol, einem Stabilisator und Isopropanol ein Graftpolyol eingesetzt wird, dessen Feststoffgehalt nur zu 0,25 bis 3,0 Gew.-% zum Feststoffgehalt des resultierenden Graftpolyols beiträgt.

EP-A-0786480 beschreibt ein Verfahren zur Herstellung von Graftpolyolen mit einer engen Teilchengrößenverteilung, das sich dadurch auszeichnet, dass die Reaktionsvorlage aus einem Trägerpolyol, Stabilisator und einem Graftpolyol besteht, wobei der, Feststoffgehalt des in der Reaktionsvorlage eingesetzten Graftpolyols zu mehr als 80 % aus dem Monomer Styren gebildet wird. Im weiteren Reaktionsverlauf werden durch radikalische Polymerisation weiterer Monomerer, mit einem Styrenanteil von > 80 Gew.-% unter Einsatz von Radikal-Initiatoren Graftpolyole mit enger Teilchengrößenverteilung gebildet.

Des Weiteren werden auch Graftpolyole mit einer deutlich separierten, bimodalen Teilchengrößenverteilung angeboten, wie beispielsweise Arcol® 1159 S und Alcupol® P 4311. Diese Graftpolyole weisen Volumenanteile von mehr als 70 % an kleinen Teilchen und weniger als 30 % an großen Teilchen auf. (vg1. Bild 2)

Polyurethanweichschäume, hergestellt unter Verwendung von Graftpolyolen mit solchen breiten Teilchengrößenverteilungen bzw. mit bimodalen Teilchengrößenverteilungen mit überwiegend kleinen Teilchen zeigen beim Verschäumen ein ungenügendes Zellöffnungsverhalten, was zu relativ geschlossenzelligen Schäumen führt. Bei der Herstellung von Polyurethanschäumen werden deshalb dem Reaktionsgemisch aus Isocyanat- und Polyol-Komponente spezielle Zellöffner-Polyole, das sind Polyole mit einem deutlich erhöhten Gehalt an Ethylenoxid-Gruppen in der Polymerkette, zugegeben. Beim Einsatz dieser Zellöffnerpolyole verringert sich jedoch die Härte der Polyurethanschäume.

Graftpolyole mit hoher Viskosität führen zu Polyolkömponenten mit erhöhter Viskosität. Dadurch kann es zu Vermischungsproblemen mit niedrigviskosen Isocyanatkomponenten kommen. Außerdem ist bei Polyolkomponenten mit Viskositäten über 2000 mPas ein Verarbeiten auf Hochdruckdosiermaschinen nicht möglich.

Eine niedrige Viskosität der Graftpolyole führt auch zu einer niedrigeren Viskosität des Reaktionsgemisches nach Verlassen des Mischkopfes, wodurch sich das Reaktionsgemisch besser in der Schaumform bzw. auf dem Schäumband verteilt. Dadurch kann die Ausbildung von Lunkern und Blasen durch eingeschlagene Luft, insbesondere bei komplizierten Schaumgeometrien (Automobilteppichrückenhinterschäumung, Automobilsitzformen usw.), reduziert bzw. verhindert werden.

Graftpolyole werden üblicherweise mit einem Feststoffgehalt von 30 bis 65 Gew.-% produziert. In vielen Polyurethananwendungen sind diese hohen Feststoffgehalte jedoch zum Erzielen des angestrebten Eigenschaftsniveaus nicht notwendig, so dass in den Polyolkomponenten weitere, nichtfeststoffhaltige Polyol zum Einsatz kommen. Die Herstellung von Graftpolyol-Mischungen mit reduziertem Feststoffgehalt aus hochgefüllten Graftpolyolen mit nichtfeststoffhaltigen Polyolen ist Stand der Technik und kann sowohl beim Kunden, aber auch beim Produzenten der Graftpolyole erfolgen. Beispiele für die Herstellung von solchen Graftpolyol-Mischungen sind in den folgenden Patenten beschrieben: US 4814360, DE 3844048, US 4436843.

Mischungen aus zwei oder mehreren Graftpolyolen werden nur in wenigen Patenten beschrieben. So werden in US 6127443 zwei Polyole mit unterschiedlichen Molekulargewichten und unterschiedlicher Funktionalität miteinander gemischt, um gezielt die Funktionalität der resultierenden Mischung einzustellen. Wenigstens eins dieser Polyole wird als Graftpolyol beschrieben.

In US 5739173 wird ein Verfahren zur Herstellung von flammbeständigen Polyurethanweichschäumen beschrieben, bei dem eine Isocyanat- und eine Polyol-Komponente zur Reaktion gebracht werden. Die Polyolkomponente besteht aus Polyetherolen, Flammschutzmittel, Stabilisatoren und Treibmitteln und kann auch ein oder mehrere Graftpolyole enthalten.

In US 6034148 wird ein Verfahren zur Herstellung von energieabsorbierenden Polyurethanschäumen beschrieben, wobei der Schäumprozess unter erhöhtem Druck durchgeführt wird. Die Polyolkomponente ist ein System, das durch Mischen eines Graftpolyols mit konventionellen Polyolen, aber auch weiteren Graftpolyolen erhalten wird, wobei die durchschnittliche Hydroxylzahl 50 bis 90 und die durchschnittliche Funktionalität 2,0 bis 2,5 beträgt.

In US 4593051 wird eine photopolymerisierbare Mischung beschrieben, die aus einer epoxidhaltigen Verbindung, einem aromatischen Onium-Salz-Photoinitiator und einer Polymer-Polyol-Dispersion besteht. Diese Polymer-Polyol-Dispersion kann auch eine Mischung von wenigstens zwei Polymer-Polyolen sein.

Das Herstellen von Graftpolyolen mit deutlich separierter, bimodaler Teilchengrößenverteilung durch Mischen von Graftpolyolen mit monomodaler Teilchengrößenverteilung und unterschiedlicher Teilchengröße ist bislang nicht beschrieben.

Aufgabe der Erfindung war es deshalb, Graftpolyole zu entwickeln, die beim Einsatz in Polyurethansystemen ein verbessertes Zellöffnungsverhalten und ein verbessertes Fließverhalten in der Schaumform aufweisen, wobei deren Herstellungsverfahren möglichst einfach und kostengünstig sein sollen.

Die Aufgabe wurde erfindungsgemäß dadurch gelöst, dass Graftpolyole mit einem Gesamtfeststoffgehalt von 5 bis 65 Gew.-% und einer bimodalen Teilchengrößenverteilung, enthaltend definierte kleine Teilchen und definierte große Teilchen, die voneinander deutlich separiert sind, wobei der Gesamtgehalt der Feststoffe mit den definierten Teilchengrößen aus einem Volumenanteil von 5 bis 45 % kleinen Teilchen und einem Volumenanteil von 95 bis 55 % großen Teilchen besteht, wobei diese Volumenanteile sich zu 100 % ergänzen, eingesetzt werden.

Gegenstand der Erfindung sind somit Graftpolyole mit bimodaler Teilchengrößenverteilung und einem Gesamtfeststoffgehalt von 5 bis 65 Gew.-%, enthaltend kleine Teilchen mit einem Teilchendurchmesser von 0,05 bis 0,7 µm und große Teilchen mit einem Teilchendurchmesser von 0,4 bis 5,0 µm, wobei sich die bei der Darstellung mit der Methode der Fraunhofer-Beugung in Verbindung mit Polarization Intensity Differential Scattering gemessenen Peaks der großen und kleinen Teilchen nicht überlappen, und einen Gesamtgehalt der Feststoffe mit den definierten Teilchengrößen, bestehend aus einem Volumenanteil von 5 bis 45 % kleinen Teilchen und einem Volumenanteil von 95 bis 55 % großen Teilchen, wobei diese Volumenanteile sich zu 100 % ergänzen.

Gegenstand der Erfindung ist weiterhin ein Verfahren zur Herstellung von solchen Graftpolyolen mit bimodaler Teilchengrößenverteilung, das dadurch gekennzeichnet ist, dass mindestens ein Graftpolyol mit monomodaler Teilchengrößenverteilung mit kleinen Teilchen, die einen Teilchendurchmesser von 0,05 bis 0,7 µm aufweisen, und mindestens ein Graftpolyol mit monomodaler Teilchengrößenverteilung mit großen Teilchen, die einen Teilchendurchmesser von 0,4 bis 5,0 µm aufweisen, in einem solchen Verhältnis miteinander gemischt werden, dass der Gesamtfeststoffgehalt des entstandenen Graftpolyols mit bimodaler Teilchengrößenverteilung aus einem Volumenanteil von 5 bis 45 % kleinen Teilchen und einem Volumenanteil von 95 bis 55 % großen Teilchen besteht, wobei sich die Volumenanteile zu 100 % ergänzen.

Darüber hinaus ist Gegenstand der Erfindung ein Semi Batch Verfahren zur Herstellung von solchen Graftpolyolen mit bimodaler Teilchengrößenverteilung, das dadurch gekennzeichnet ist, dass die Reaktionsvorlage jeweils mindestens ein Trägerpolyol, ein Makromer und ein Graftpolyol mit monomodaler Teilchengrößenverteilung enthält, wobei der Feststoffgehalt im resultierenden Graftpolyol zu mehr als 3 Gew.-% aus dem Festststoffgehalt des in der Reaktionsvorlage eingesetzten Graftpolyols mit monomodaler Teilchengrößenverteilung besteht, und das Gewicht des in der Reaktionsvorlage eingesetzten Makromers, bezogen auf das Gesamtgewicht der eingesetzten ethylenisch ungesättigten Monomere, 1 bis 30 Gew.-% beträgt, jedoch mindestens so groß ist, dass im weiteren Reaktionsverlauf kleine Teilchen gebildet werden.

Und schließlich sind Gegenstände der Erfindung die Verwendung solcher Graftpolyole zur Herstellung von Polyurethanen sowie ein Verfahren zur Herstellung von Polyurethanen durch Umsetzung von organischen und/oder modifizierten organischen Polyisocyanaten (a) mit Graftpolyolen (b) und gegebenenfalls weiteren gegenüber Isocyanaten reaktive Wasserstoffatome aufweisenden Verbindungen (c) in Gegenwart von Katalysatoren (d), gegebenenfalls Wasser und/oder anderen Treibmitteln (e) und gegebenenfalls weiteren Hilfs- und Zusatzstoffen (f), das dadurch gekennzeichnet ist, dass als Graftpolyole (b) solche mit einer bimodalen Teilchengrößenverteilung und einem Gesamtfeststoffgehalt von 5 bis 65 Gew.-%, enthaltend kleine Teilchen mit einem Teilchendurchmesser von 0,05 bis 0,7 µm und große Teilchen mit einem Teilchendurchmesser von 0,4 bis 5,0 µm, wobei sich die bei der Darstellung mit der Methode der Fraunhofer-Beugung in Verbindung mit Polarization Intensity Differential Scattering gemessenen Peaks der großen und kleinen Teilchen nicht überlappen, und einen Gesamtgehalt der Feststoffe mit den definierten Teilchengrößen, bestehend aus einem Volumenanteil von 5 bis 45 % kleinen Teilchen und einem Volumenanteil von 95 bis 55 % großen Teilchen, wobei diese Volumenanteile sich zu 100 % ergänzen, eingesetzt werden.

Wir fanden bei unseren Untersuchungen überraschenderweise, dass die erfindungsgemäßen Graftpolyole mit einer ausgeprägten bimodalen Teilchengrößenverteilung eine niedrigere Viskosität und sehr gute Verarbeitungseigenschaften aufweisen. Sie bewirken beim Verschäumen im Gegensatz zu Graftpolyolen mit einer monomodalen Verteilung oder schwach ausgeprägten bimodalen Teilchengrößenverteilung ein verbessertes Zellöffnungsverhalten und ein verbessertes Fließverhalten in der Schaumform.

Aufgrund des verbesserten Zellöffnungsverhaltens beim Einsatz dieser Graftpolyole kann zum Beispiel in Kaltschaumrezepturen der Einsatz von Zellöffnungspolyolen und anderer Prozesshilfsmittel eingeschränkt werden, was die Rezeptur verbilligt, eine mögliche Quelle für Dosierfehler ausschaltet und die Schaumeigenschaften verbessert. Hervorzuheben sind beispielsweise verbesserte Reißdehnungen und Weiterreißfestigkeiten bei Formschäumen bzw. bessere Werte für Zugfestigkeit, Dehnung und Druckverformungsrest bei konventionellen Blockschaumstoffen mit erhöhter Tragfähigkeit.

Die erfindungsgemäßen Graftpolyole besitzen ein besseres Fließverhalten unter starker Scherbelastung. Dadurch erhöht sich die Filtrationsgeschwindigkeit beim Reinigen der Graftpolyole bei gegebener Filterfläche bzw. wird für gleiche Durchsätze weniger Filterfläche benötigt. In Schaumformen mit komplizierten Geometrien (Automobilteppichrückenhinterschäumung, Automobilsitzformen usw.) fließt das Reaktionsgemisch besser, was zur Verringerung der Lunkerbildung führt.

Die erfindungsgemäßen Graftpolyole sind Dispersionen von Acrylnitril-Styren-Copolymeren in einem Polyetherol als kontinuierlicher Phase.

Sie besitzen einen Gesamtfeststoffgehalt von 5 bis 65 Gew.-%, vorteilhafterweise von 10 bis 50 Gew.-%, und eine ausgeprägte, deutlich separierte bimodale Teilchengrößenverteilung aus kleinen und großen Teilchen, wie sie weiter unten definiert sind. (siehe Bild 3)

Der Volumenanteil der kleinen Teilchen beträgt dabei 5 bis 45 %, vorzugsweise 10 bis 40 % und besonders bevorzugt 15 bis 35 %, und der Volumenanteil der großen Teilchen 95 bis 55 %, vorzugsweise 90 bis 60 % und besonders bevorzugt 85 bis 65 %.

Kleine Teilchen im Sinne dieser Erfindung sind solche mit einem Teilchendurchmesser von 0,05 bis 0,7 µm, vorzugsweise von 0,1 bis 0,5 µm und besonders bevorzugt von 0,2 bis 0,4 µm.

Große Teilchen im Sinne dieser Erfindung sind solche mit einem Teilchendurchmesser von 0,4 bis 5,0 µm, vorzugsweise von 0,5 bis 4,0 µm und besonders bevorzugt von 0,5 bis 3,0 µm.

Die Teilchengrößen und deren Verteilung können mittels dynamischer Lichtstreuung und Frauenhofer-Beugung dargestellt werden. Das Verhältnis, angegeben in Vol.-%, von kleinen zu großen Teilchen wird aus der Summenkurve entnommen.

Die Bestimmung der Teilchengrößenverteilungen erfolgte mit einem Laser Particle Analyzer der Firma Coulter unter den folgenden Bedingungen:

| | |
|---|---|
| Gerät: | Laser Particle Analyzer LS 230 (Coulter) Messbereich: 0,04 µm bis 2000 µm |
| Messprinzip: | Fraunhofer Beugung in Verbindung mit PIDS (Polarization Intensity Differential Scattering) |
| Laser- Wellenlänge: | 750 nm |
| PIDS Lichtquelle: | Wolfram-Halogen-Lampe, 3 Filter: 450 nm, 600 nm, 900 nm, Streulichtmessung unter 6 Winkeln: 60°, 75°, 90°, 105°, 120° und 146°, vertikal und horizontal polarisiert |
| Dispergiereinheit: | Small Volume Module (SVM-Modul) |
| Optisches Modell: | PSL (Polystyren Latex) mit PIDS, Formfaktor 1 |
| Messflüssigkeit: | 2-Propanol |
| Flüssigk. Brechungsindex : | 1,374 |
| Realteil Brechungsindex Probe: | 1,6 |
| Imaginärteil Brechungsindex Probe: | 0 |
| Probenpräparation: | 0,5 ml Graftpolyol werden in einen 30-ml-Becher zu 15 ml Isopropanol (2-Propanol) mittels Pasteurpipette gegeben und gut verrührt. Diese Dispersion wird tropfenweise in den SVM-Modul des Messgerätes gegeben, bis automatisch ausreichende Dichte signalisiert wird. Danach wird die Messung gestartet. |

Die erfindungsgemäßen kleinen Teilchen sind gekennzeichnet durch einen Peak, der vorzugsweise beginnt in einem Bereich von 0,05 bis 0,08 µm und endet in einem Bereich von 0,4 bis 0,7 µm. Das Maximum des Peaks der kleinen Teilchen liegt vorteilhafterweise bei 0,2 bis 0,40 µm.

Die erfindungsgemäßen großen Teilchen sind gekennzeichnet durch einen Peak, der vorzugsweise beginnt in einem Bereich von 0,4 bis 1,0 µm und endet in einem Bereich von 1,2 bis 5,0 µm. Das Maximum des Peaks der großen Teilchen liegt vorteilhafterweise bei 0,7 bis 2,5 µm.

Die gemessenen Peaks der kleinen und großen Teilchen sind erfindungsgemäß deutlich voneinander separiert und überlappen sich nicht. Selbstverständlich können in geringen Anteilen (üblicherweise max. 5 Vol.-%) auch Teilchen anderer Größen, die nicht in die definierten Bereiche fallen, im erfindungsgemäßen Graftpolyol enthalten sein, ohne dass dessen Bimodalität in Frage zu stellen wäre und ohne dass die angestrebten Eigenschaften des fertigen Polymerpolyols und dessen Verarbeitung in Polyurethansystemen gestört würden.

Die Herstellung der erfindungsgemäßen Graftpolyole kann auf unterschiedliche Art und Weise erfolgen.

Graftpolyole werden üblicherweise durch radikalische Polymerisation der Monomere Acrylnitril, Styren sowie optionell weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyole kommen Verbindungen mit mindestens einer Hydroxylgruppen-Funktionalität von 2 bis 8, vorzugsweise 2 bis 6, und einem mittleren Molekulargewicht von 300 bis 8000, vorzugsweise von 300 bis 5000, zur Anwendung. Die Hydroxylzahl der Polyhydroxylverbindungen beträgt dabei in aller Regel 20 bis 160 und vorzugsweise 28 bis 70.

Die als Trägerpolyole eingesetzten Polyetherpolyole werden nach bekannten Verfahren, wie sie beispielsweise weiter unten beschrieben sind, hergestellt. Die Trägerpolyole können einzeln oder in Form von Mischungen verwendet werden.

Makromere, auch als Stabilisatoren bezeichnet, sind lineare oder verzweigte Polyole mit Molekulargewichten ≥ 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten,wie 3-Isopropenyl-1,1-dimethylbenzyl-isocyanate, Isocyanato-ethylmethacrylate, an ein bereits bestehendes Polyol eingefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Patenten US 4 390 645, US 5 364_906, EP 0 461 800, US 4997857, US 5358984, US 5990232, WO 01/04178 und US 6013731 beschrieben.

Während der radikalischen Polymerisation werden die Makromere mit in die Copolymerkette eingebaut. Dadurch bilden sich Blockcopolymere mit einem Polyether- und einem Poly-acrylnitrilstyren-Block welche in der Grenzfläche von kontinuierlicher Phase und dispergierter Phase als Phasenvermittler wirken und das Agglomerieren der Graftpolyolpartikel unterdrücken. Der Anteil der Makromere beträgt üblicherweise 1 bis 15 Gew.-%, bezogen auf das Gesamtgewicht der zur Herstellung des Graftpolyols eingesetzten Monomere.

Zur Herstellung von Graftpolyolen werden üblicherweise Moderatoren, auch als Kettenüberträger bezeichnet, eingesetzt. Der Einsatz und die Funktion dieser Moderatoren wird in den Patenten US 4 689 354, EP 0 365 986, EP 0 510 533 und EP 0 640 633, EP 008 444, EP 0731 118 B1 beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graftpolyole beeinflusst. Der Anteil der Moderatoren beträgt üblicherweise 0,5 bis 25 Gew.-%, bezogen auf das Gesamtgewicht der zur Herstellung des Graftpolyols eingesetzten Monomere. Moderatoren, die üblicherweise zur Herstellung von Graftpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren.

Zur Initiierung der radikalischen Polymersisation werden üblicherweise Peroxid- oder Azo-Verbindungen, wie Dibenzoylperoxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneodecanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Graftpolyols eingesetzten Monomere.

Die radikalische Polymerisation zur Herstellung von Graftpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Graftpolyolen sind Temperaturen von 80 bis 140°C bei einem Druck von Atmosphärendruck bis 15 bar.

Graftpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Beim Semi Batch Verfahren wird nur ein Teil der Rohstoffe, die Reaktionsvorlage, im Reaktor vorgelegt. Die restlichen Rohstoffe werden in einem oder mehreren Dosierströmen während der Reaktion in den Reaktor überführt. Dabei sollten aus Sicherheitsgründen der Initiator und die Monomere sich nicht in einem Dosierstrom befinden. Durch die Semi Batch Fahrweise können der Reaktionsverlauf, wie die Abführung der Reaktionswärme und die Teilchenbildung, besser kontrolliert werden. Üblicherweise werden bei der Herstellung von Graftpolyolen im Semi Batch Verfahren die restlichen Rohstoffe innerhalb von 60 bis 300 Minuten in den Reaktor dosiert, woran sich eine 5 bis 45 minütige Nachreaktionszeit anschließt.

Nach der Synthese durchlaufen die Rohgraftpolyole noch verschiedene Aufarbeitungsschritte, in denen die Eigenschaften der Verkaufsprodukte eingestellt werden. So werden die während der radikalischen Polymerisation nicht vollständig umgesetzten Monomere und weitere Nebenprodukte, wie Geruchsstoffe, flüchtige organische Verbindungen (VOC) und Fogging-verursachende Verbindungen, üblicherweise durch Strippen unter Vakuum entfernt. Graftpolyole dürfen keine übergroßen Partikel und Verunreinigungen enthalten, damit es nicht zu Störungen beim Verarbeiten (z.B. Verstopfen von Filtern, Sieben, Düsen) kommt. Deshalb werden Graftpolyole meist vor dem Verkauf durch eine ein- oder mehrstufige Filtration gereinigt.

Graftpolyole mit deutlich separierter, bimodaler Teilchengrößenverteilung können durch Mischen von Graftpolyolen mit enger, monomodaler Teilchengrößenverteilung und unterschiedlichen Teilchengrößen hergestellt werden. (vgl. Bild 4)

Die erfindungsgemäßen Graftpolyole erhält man, wenn mindestens ein Graftpolyol mit monomodaler Teilchengrößenverteilung mit kleinen Teilchen, die einen Teilchendurchmesser von 0,05 bis 0,7 µm, vorzugsweise von 0,1 bis 0,5 µm und besonders bevorzugt von 0,2 bis 0,4 µm, aufweisen, und mindestens ein Graftpolyol mit monomodaler Teilchengrößenverteilung mit großen Teilchen, die einen Teilchendurchmesser von 0,4 bis 5,0 µm, vorzugsweise von 0,5 bis 4,0 µm und besonders bevorzugt von 0,7 bis 3,0 µm, aufweisen, miteinander gemischt werden. Dabei können alle diskontinuierlich, aber auch kontinuierlich arbeitende Mischverfahren entsprechend des Standes der Technik zum Einsatz kommen.

Die monomodalen Graftpolyole sind dabei in einem solchen Verhältnis miteinander zu mischen, dass der Gesamtfeststoffgehalt des entstandenen Graftpolyols mit bimodaler Teilchengrößenverteilung aus einem Volumenanteil von 5 bis 45 %, vorzugsweise 10 bis 40 % und besonders bevorzugt 15 bis 35 %, kleinen Teilchen und einem Volumenanteil von 95 bis 55 %, vorzugsweise 90 bis 60 % und besonders bevorzugt 85 bis 65 %, großen Teilchen besteht, wobei sich die Volumenanteile zu 100 % ergänzen. Auch hier können, wie bereits weiter oben beschrieben, in geringen Anteilen (vorzugsweise weniger als 5 Vol.-%) Teilchen anderer Größen, die nicht in die definierten Bereiche fallen, in den Ausgangsgraftpolyolen und im erfindungsgemäßen Graftpolyol enthalten sein, ohne das Ergebnis negativ zu beeinflussen.

Dabei dürfen sich die bei der Darstellung mit der Methode der Lichtsteuerungsuntersuchung gemessenen Peaks der großen und kleinen Teilchen des entstandenen Graftpolyols nicht überlappen, wie es bereits weiter oben bei der Beschreibung der erfindungsgemäßen Graftpolyole ausgeführt ist.

Die erfindungsgemäß zu mischenden Graftpolyole können die gleichen Trägerpolyole enthalten, sie können sich aber auch in ihren Trägerpolyolen unterscheiden (OH-Zahl, Ethylenoxid/Propylenoxid-Verhältnis, chemische Struktur, Funktionalität, primärer OH-Gruppengehalt). Durch das Mischen von Graftpolyolen mit unterschiedlichen Trägerpolyolen lassen sich gezielt das Schäumverhalten und die Schaumeigenschaften einstellen.

Das Verhältnis der Monomere Acrylnitril zu Styren im Feststoff der zu mischenden Graftpolyole kann gleich sein, vorzugsweise beträgt es von 1 : 1 bis 1 : 3; es kann sich aber auch unterscheiden.

Der Feststoffgehalt des aus dem Mischprozess resultierenden Graftpolyols beträgt 5 bis 65 Gew.-%, wobei dieser Feststoffgehalt zu gleichen Anteilen aber auch zu unterschiedlichen Anteilen aus den zu mischenden Graftpolyolen resultieren kann. Der Feststoffgehalt von Graftpolyolen errechnet sich aus dem prozentualen Verhältnis der eingesetzten Monomeren, vorzugsweise Styren, Acrylnitril und des Makromeren, zu den eingesetzten Trägerpolyolen und wird am fertigen Graftpolyol üblicherweise gravimetrisch aus dem prozentualen Verhältnis der Feststoffmasse zu Gesamtmasse des Graftpolyols bestimmt.

Für dieses erfindungsgemäße Verfahren können Graftpolyole des Standes der Technik, ausgewählt nach den jeweils gewünschten Partikelgrößen und Feststoffgehalten, eingesetzt werden. Die monomodalen Graftpolyole werden nach üblichen Verfahren hergestellt.

Graftpolyole mit kleinen Teilchen und monomodaler Teilchengrößenverteilung lassen sich beispielsweise durch Semi Batch Reaktionen herstellen, wie sie in einer Reihe von Patenten, wie US 4522976, EP 0163188, US 4568705, DE 3575734, EP 00910336, EP 221412, beschrieben sind. Dabei kann die mittlere Teilchengröße durch die Menge des vorgelegten Makromers eingestellt werden. Solche Graftpolyole weisen üblicherweise Teilchengrößen von 0,05 bis 0,7 µm auf.

Graftpolyole mit großen Teilchen und enger, monomodaler Teilchengrößenverteilung können nach verschiedenen Verfahren hergestellt werden.

Nach dem Semi Batch Verfahren lassen sich Graftpolyole mit enger, monomodaler Teilchengrößenverteilung und großen Teilchen herstellen, wenn man, im Gegensatz zu der oben für Graftpolyole mit kleinen Teilchen beschriebenen Fahrweise, in der Reaktions-vorlage, einem Gemisch aus Trägerpolyol und Makromer und weiteren Reaktionskomponenten, wie beispielsweise Moderatoren, deutlich weniger Makromer vorlegt. Dadurch werden weniger Teilchen nukleiert, die im weiteren Reaktionsverlauf zu großen Teilchen wachsen.

Weiterhin lassen sich Graftpolyole mit enger, monomodalen Teilchengrößenverteilung und großen Teilchen in einem Semi Batch Verfahren herstellen, indem man eine Reaktionsvorlage aus Trägerpolyol, Makromer und einem Graftpolyol mit kleinen Teilchen und enger, monomodaler Teilchengrößenverteilung, wie weiter oben beschrieben, einsetzt, wobei im Verlauf der Semi Batch Reaktion diese Teilchen zu ihrer endgültigen Größe aufwachsen. Das in der Reaktionsvorlage eingesetzte Graftpolyol mit kleinen.Teilchen und enger, monomodaler Teilchengrößenverteilung hat vorteilhafterweise einen Feststoffgehalt von 20 bis 60 Gew.-%. Der Feststoffgehalt dieses Graftpolyols trägt zu mehr als 3,0 Gew.-% zum Feststoffgehalt des resultierenden Graftpolyols mit großen Teilchen und enger, monomodaler Teilchengrößenverteilung bei. Das Gewicht des in der Reaktionsvorlage eingesetzten Makromers, bezogen auf das Gesamtgewicht der eingesetzten ethylenisch ungesättigten Monomere, beträgt vorzugsweise 1,0 bis 10,0 Gew-%, besonders bevorzugt 3,0 bis 8,0 Gew.-%, und ist nur so groß, dass im weiteren Verlauf der Reaktion keine weiteren kleinen Teilchen mit enger monomodaler Teilchengrößenverteilung gebildet werden.

Ein weiteres Verfahren zur Herstellung der erfindungsgemäßen Graftpolyole mit einer deutlich separierten bimodalen Teilchengrößenverteilung ist ein Semi Batch Verfahren, das dadurch gekennzeichnet ist, dass die Reaktionsvorlage jeweils mindestens ein Trägerpolyol, ein Makromer und ein Graftpolyol mit monomodaler Teilchengrößenverteilung enthält, wobei der Feststoffgehalt im resultierenden Graftpolyol zu mehr als 3 Gew.-%, vorzugsweise mehr als 3,3 Gew.-% und besonders bevorzugt mehr als 3,5 Gew.-%, aus dem Feststoffgehalt des in der Reaktionsvorlage eingesetzten Graftpolyols mit monomodaler Teilchengrößenverteilung besteht. Besonders gute Ergebnisse werden erzielt, wenn der Feststoffgehalt im resultierenden Graftpolypl zu mehr als 6,8 Gew.-% aus dem Feststoffgehalt des Graftpolyols in der Reaktionsvorlage besteht. Die Obergrenze des aus dem in der Reaktionsvorlage eingesetzten Graftpolyols resultierenden Feststoffgehaltes liegt vorzugsweise bei 20 Gew.-%.

Dabei beträgt das Gewicht des in der Reaktionsvorlage eingesetzten Makromers, bezogen auf das Gesamtgewicht der eingesetzten ethylenisch ungesättigten Monomere, 1 bis 30 Gew.-%, vorteilhafterweise mindestens 2 Gew.-%, bevorzugt jedoch 3 bis 15 Gew.-%; sie ist jedoch so groß, dass im weiteren Reaktionsverlauf kleine Teilchen nukleiert werden.

Die benötigte Makromermenge ist direkt abhängig von der mittleren Teilchengröße des in der Reaktionsvorlage eingesetzten Graftpolyols und vom Molekulargewicht des eingesetzten Makromers.

Da das Makromer zuerst die Oberfläche der in der Reaktionsvorlage eingesetzten Teilchen sättigt und nur dann noch überschüssiges Makromer weitere Teilchen nukleiert, steigt mit zunehmendem Feststoffgehalt und/oder mit kleiner werdendem Teilchendurchmesser bei gegebenem Feststoffgehalt des Graftpolyols in der Reaktionsvorlage (und damit größer werdender Gesamtpartikeloberfläche) die einzusetzende Makromermenge.

Bei konstantem mittleren Teilchendurchmesser des in der Reaktionsvorlage eingesetzten Graftpolyols wird das Verhältnis von großen und kleinen Teilchen im resultierenden Graftpolyol durch das Verhältnis der Masse des in der Reaktionsvorlage eingesetzten Makromers zur Masse des Feststottes im vorgelegten Graftpolyol bestimmt.

Als Makromere werden vorteilhafterweise Polyole mit einem mittleren Molekulargewicht von mehr als 2000 g/mol und einer Hydroxylgruppen-Funktionalität ≥ 2 eingesetzt, welche mindestens eine endständige, polymerisationsfähige, ethylenisch ungesättigte Gruppe besitzten. Bevorzugt sind jedoch Makromere mit einem mittleren Molekulargewicht von mehr als 3000 g/mol, noch mehr bevorzugt mit einem mittleren Molekulargewicht von mehr als 5000 g/mol.

Die erfindungsgemäßen Graftpolyole mit deutlich ausgeprägter bimodaler Teilchengrößenverteilung weisen eine um vorteilhafterweise mindestens 5 %, bevorzugt eine um mindestens 10 % und besonders bevorzugt eine um 12 bis 20 %, geringere Viskosität (bei 25°C) im Vergleich zu einem Graftpolyol mit monomodaler Teilchengrößenverteilung und ausschließlich kleinen oder großen Teilchen auf, unter der Voraussetzung dass sich die zu vergleichenden Graftpolyole nicht im Feststoffgehalt und in den Einsatzstoffen unterscheiden. In besonderen Fällen wird eine Viskositätssenkung bis zu 45 % erreicht.

Die erfindungsgemäßen Graftpolyole besitzen ein besseres Fließverhalten unter starker Scherbelastung. Dadurch erhöht sich die Filtrationsgeschwindigkeit beim Reinigen der Graftpolyole nach der Produktion oder es wird für gleiche Durchsätze weniger Filterfläche benötigt.

Aufgrund des verbesserten Zellöffnungsverhaltens beim Einsatz dieser Graftpolyole kann in Kaltschaumrezepturen der Einsatz von Zellöffnungspolyolen und anderer Prozesshilfsmittel eingeschränkt werden, was die Rezeptur verbilligt, eine mögliche Quelle für Dosierfehler ausschaltet und die Schaumeigenschaften verbessert. Es werden bei Formschäumen verbesserte Reißdehnungen und Weiterreißfestigkeiten und bei konventionellen Blockschaumstoffen mit erhöhter Tragfähigkeit bessere Werte für Zugfestigkeit und Dehnung sowie Druckverformungsrest erreicht.

Weiterhin zeigen sie eine hohe Lagerstabilität und sehr gute Verarbeitungseigenschaften bei der Weiterverarbeitung zu Polyurethanendprodukten.

Die erfindungsgemäßen Graftpolyole eignen sich hervorragend für den Einsatz als Polyolkomponente bei der Herstellung von Polyurethanen, insbesondere zur Herstellung von Formweichschäumen sowie HLB (High Load Bearing, konventioneller Weichschaum mit höherer Tragfähigkeit)- und HR (High Resilence, hochelastischer Weichschaum)-Blockweichschäumen.

Die Herstellung der erfindungsgemäßen Polyurethane erfolgt durch Umsetzung von organischen und/oder modifizierten organischen Polyisocyanaten (a) mit den oben beschriebenen erfindungsgemäßen Graftpolyolen (b) und gegebenenfalls weiteren gegenüber Isocyanaten reaktive Wasserstoffatome aufweisenden Verbindungen (c) in Gegenwart von Katalysatoren (d), gegebenenfalls Wasser und/oder anderen Treibmitteln (e) und gegebenenfalls weiteren Hilfs- und Zusatzstoffen (f).

Zu den neben den erfindungsgemäßen Graftpolyolen mit bimodaler Teilchengrößenverteilung verwendbaren weiteren Ausgangskomponenten ist im Einzelnen Folgendes auszuführen:

Als organische Polyisocyanate (a) zur Herstellung der erfindungsgemäßen Polyurethane kommen die an sich bekannten aliphatischen, cycloaliphatischen araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate, wie Cyclohexan-1,3- und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2' -Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt eingesetzt werden Gemische aus Diphenylmethandiisocyanat-Isomeren mit Anteilen an 2,4'-Diphenylmethandiisocyanat von mindestens 30 Gew.-%.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Urethangruppen enthaltende organische, vorzugsweise aromatische, Polyisocyanate mit NCO-Gehalten von 43 bis 15 Gew.-%, vorzugsweise von 31 bis 21 Gew.-%, bezogen auf das Gesamtgewicht, durch Umsetzung beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen oder modifiziertes Roh-MDI oder 2,4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gemischt werden.

Besonders bewährt haben sich als modifizierte organische Polyisocyanate NCO-gruppenhaltige Prepolymere, die vorteilhafterweise gebildet werden aus der Reaktion der Isocyanate (a) mit polyolen der Komponenten (b) und/oder (c) sowie gegebenenfalls Verbindungen der Komponenten (c) und/oder (d).

Neben dem oben beschriebenen erfindungsgemäß eingesetzten Graftpolyolen (b) werden gegebenenfalls weitere gegenüber Isocyanaten reaktive Wasserstoffatome aufweisende Verbindungen (c) zugegeben.

Hierfür kommen vorrangig Verbindungen mit mindestens zwei reaktiven Wasserstoffatomen in Frage. Dabei werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet. Die Hydroxylzahl der Polyhydroxylverbindungen beträgt dabei in aller Regel 20 bis 160 und vorzugsweise 28 bis 70.

Die in der Komponente (c) verwendeten Polyetherpolyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome gebunden enthält, oder durch kationische Polymerisation mit Lewisssäuren, wie Antimonpentachlorid, Borfluorid-Etherat u.a., oder Bleicherde als Katalysatoren oder durch Doppelmetallcyanidkatalyse aus einem oder mehreren Alkylenoxiden mit 2 bis 4 Kohlenstoffatomen im Alkylenrest hergestellt. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4', 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit.

Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und Molekulargewichte von 300 bis 8000, vorzugsweise 300 bis 6000 und insbesondere 1000 bis 5000 und geeignete Polyoxytetramethylenglykole ein Molekulargewicht bis ungefähr 3500.

Die Polyetherpolyole können einzeln oder in Form von Mischungen verwendet werden.

Neben den beschriebenen Polyetherpolyole können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetale und hydroxylgruppenhaltigen aliphatischen Polycarbonate öder Mischungen aus mindestens zwei der genannten Polyole verwendet werden. Die Hydroxylzahl der Polyhydroxylverbindungen beträgt dabei in aller Regel 20 bis 80 und vorzugsweise 28 bis 70.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen,-nach üblichen Verfahren hergestellt werden. Üblicherweise werden die organischen Polycarbonsäuren und/oder -derivate und mehrwertigen Alkohole, vorteilhafterweise im Molverhältnis von 1:-1 bis 1,8, vorzugsweise von 1:1,05 bis 1,2, katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Verbindungen der Komponente (c) können einzeln oder in Form von Mischungen verwendet werden.

Die Polyurethane können ohne oder unter Mitverwendung von Kettenverlängerungs- und/oder Vernetzungsmitteln hergestellt werden. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethane Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Polyolverbindungen, zum Einsatz.

Als Treibmittel (e) können die aus der Polyurethanchemie allgemein bekannten Fluorchlorkohlenwasserstoffe (FCKW) sowie hoch- und/oder perfluorierte Kohlenwasserstoffe verwendet werden. Der Einsatz dieser Stoffe wird jedoch aus ökologischen Gründen stark eingeschränkt bzw. ganz eingestellt. Neben HFCKW und HFKW bieten sich insbesondere aliphatische und/oder cycloaliphatische Kohlenwasserstoffe, insbesondere Pentan und Cyclopentan oder Acetale, wie z.B. Methylal und CO₂, als Alternativtreibmittel an. Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-0351614. Die eingesetzte Menge des Treibmittels bzw. der Treibmittelmischung liegt dabei bei 1 bis 25 Gew.-%, vorzugsweise 1 bis 15 Gew.-%, jeweils bezogen auf das Gesamtgewicht der Komponenten (b) bis (d).

Weiterhin ist es möglich und üblich, als Treibmittel der Polyolkomponente Wasser in einer Menge von 0,5 bis 15 Gew.-%, vorzugsweise 1 bis 5 Gew.-%, bezogen auf das Gesamtgewicht der Komponenten (b) bis (f), zuzusetzen. Der Wasserzusatz kann in Kombination mit dem Einsatz der anderen beschriebenen Treibmittel erfolgen.

Vorzugsweise wird im Sinne der Erfindung Wasser als Treibmittel benutzt.

Als Katalysatoren (d) zur Herstellung der Polyurethane werden insbesondere Verbindungen verwendet, die die Reaktion der reaktiven Wasserstoffatome, insbesondere hydroxylgruppenenthaltender Verbindungen der Komponenten (b), (c) und (d), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamn, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. vorzugsweise verwendet werden 0,001 bis 5 Gew.-%, insbesondere 0,05 bis 2 Gew.-% Katalysator bzw. Katalysatorkombination, bezogen auf das Gewicht der Aufbaukomponenten (b) bis (f).

Der Reaktionsmischung zur Herstellung der erfindungsgemäßen Polyurethane können gegebenenfalls noch weitere Hilfsmittel und/oder Zusatzstoffe (f) einverleibt werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige und halogenfreie Flammschutzmittel. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmäßig erwiesen, 5 bis 50 Gew.-Teile, vorzugsweise 5 bis 30 Gew.-Teile, der genannten Flammschutzmittel für jeweils 100 Gew.-Teile der Aufbaukomponenten (b) bis (f) zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate oder Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Als Stabilisatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-Teilen, bezogen auf 100 Gew.-Teile der Komponenten (b) bis (f), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (f), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem oben zitierten Kunststoffhandbuch, Polyurethane, Band VII, Hanser-Verlag München, Wien, 1. bis 3. Auflage, zu entnehmen.

Zur Herstellung der erfindungsgemäßen Polyurethane werden die organischen und/oder modifizierten organischen Polyisocyanate (a), das Graftpolyol (b) und gegebenenfalls die weiteren gegenüber Isocyanaten reaktive Wasserstoffatome aufweisenden Verbindungen (c) sowie weiteren Bestandteilen (d) bis (f) in solchen Mengen zur Umsetzung gebracht, dass das Äquivalenzverhältnis von NCO-Gruppen der Polyisocyanate (a) zur Summe der reaktiven Wasserstoffatome der Komponenten (b) bis (f) weniger als 0,95 : 1, vorzugsweise weniger als 0,70 : 1, beträgt.

Polyurethanschaumstoffe nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeignete Bandstraßen oder der diskontinuierliche Eintrag in offene Blockformen zur Erzeugung von Schaumblöcken.

Als besonders vorteilhaft, insbesondere bei Formschaumstoffen, hat es sich erwiesen, nach dem Zweikomponentenverfahren zu arbeiten und die Aufbaukomponenten (b) bis (f) zu einer sogenannten Polyolkomponente, oft auch als Komponente A bezeichnet, zu vereinigen und als Isocyanatkomponente, oft auch als Komponente B bezeichnet, die organischen und/oder modifizierten organischen Polyisocyanate (a), besonders bevorzugt ein NCO-Prepolymer oder Mischungen aus diesem Prepolymeren und weiteren Polyisocyanaten, und gegebenenfalls Treibmittel (e) zu verwenden. Blockschaumstoffe werden üblicherweise nach dem Mehrkomponenten-Verfahren (Einzeldosierung der Roh- und Zusatzstoffe oder mehrere verschiedene Vormischungen) hergestellt. Die Reaktionsprodukte werden bei Blockschäumen in einem Mischkopf zusammengeführt und direkt oder über einen Trog auf die offene Schäumbahn gegeben. Die Temperaturen liegen dabei vorzugsweise zwischen 20 und 25°C.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Die nach dem erfindungsgemäßen Verfahren hergestellten Polyurethanschaumstoffe weisen vorteilhafterweise eine Dichte von 10 bis 150 kg/m³, vorzugsweise von 40 bis 60 kg/m³ bei Formschäumen und vorzugsweise von 14 bis 100 kg/m³ und insbesondere von 20 bis 80 kg/m³ bei Blockschäumen, auf. Die Stauchhärten liegen dann im Bereich von 1 bis 20 kPa, vorzugsweise bei 1,5 bis 12 kPa.

Die vorliegende Erfindung soll anhand der angeführten Beispiele erläutert werden, ohne jedoch hierdurch eine entsprechende Eingrenzung vorzunehmen.

### Beispiele:

### Rohstoffe

Zur Herstellung der Graftpolyole sowie der Graftpolyol-Mischungen kamen die folgenden Rohstoffe zum Einsatz:
- Polyol 1:: Polyetheralkohol auf Basis Glycerin, Monoethylenglycol, Propylenoxid und Ethylenoxid, Hydroxylzahl: 48 mg KOH/g, Viskosität bei 25°C: 540 mPas, geeignet für konventionellen Blockschaum
- Polyol 2:: Polyetheralkohol auf Basis Glycerin, Propylenoxid und Ethylenoxid,Hydroxylzahl: 35 mg KOH/g, Viskosität bei 25°C: 850 mPas, geeignet für high resilience (HR)-Blockschaum und Formschaum
- Polyol 3:: Polyetheralkohol auf Basis Glycerin, Propylenoxid und Ethylenoxid; EO-Gehalt 73 Gew.-%, Hydroxylzahl: 42 mg KOH/g, Viskosität bei 25°C: 950 mPas, Zellöffnerpolyol
- Initiator 1:: Wako® V-601, Dimethyl-2,2'-azobis-isobutylat, Wako Chemicals GmbH
- Initiator 2:: Vazo ® 67, 2,2'-Azobis (2-methylbutyronitril), Du Pont de Nemours GmbH
- Initiator 3:: Trigonox ® 121, Tert.-Amylperoxy-2-ethylhexanoat, Akzo Nobel Chemicals
- Makromer 1:: Monofumarat-Ester, bei dem die zweite Säuregruppe mit Propylenoxid umgesetzt wurde, eines Polyetheralkohols auf Basis Trimethylenpropan und Propylenoxid; Hydroxylzahl: 19 mg KOH/g
- Makromer 2:: Monofumarat-Ester, bei dem die zweite Säuregruppe mit Propylenoxid umgesetzt wurde, eines Polyetheralkohols auf Basis Glycerin, Propylenoxid, Ethylenoxid; Hydroxylzahl: 22 mg KOH/g
- Makromer 3:: 3-Isopropenyl-α,α-dimethylbenzyl-isocyanat (TMI) -Addukt eines Polyetheralkohols auf Basis Sorbitol, Propylenoxid und Ethylenoxid, Hydroxylzahl: 16 mg KOH/g
- Styren:: Styrol, stabilisiert mit 4-tert.-Butylbrenzkatechin (TBC), BASF AG
- Acrylnitril:: Acrylnitril, stabilisiert mit Monomethyletherhydrochinon (MEHQ), BASF AG

### Synthese des Fumarat-Macromers (Macromer 1 und 2)

Zum Basispolyol mit einem Wassergehalt von < 0,02 Gew.-% wurden Kalzium-Naphthenat (0,5 Gew.-%, bezogen auf Basispolyol) und Maleinsäureanhydrid (0,8 mol pro mol Basispolyol) gegeben. Unter Stickstoffatmosphäre und Rühren wurde das Reaktionsgemisch auf 125°C erwärmt. Während der anschließenden zweistündigen Reaktionszeit bildete sich der Halbester der Maleinsäure mit dem Basispolyol. Nach Erwärmen des Reaktionsgemisches auf 143°C wurde ein Überschuss an Propylenoxid (4,4-fach, bezogen auf die molare Menge an Maleinsäureanhydrid) zugegeben und das Reaktionsgemisch ließ man für weitere 8 Stunden reagieren. Zum Ende der Reaktionsperiode wurde der Überschuss an Propylenoxid unter Vakuum entfernt, das Produkt auf 25°C abgekühlt und mit Antioxidanzien stabilisiert.

### Synthese des TMI-Macromers (Macromer 3)

Zum Basispolyol mit einem Wassergehalt < 0,02 Gew.-% wurden bei einer Temperatur von 80°C unter Rühren Dibutylzinndilaurat als Veresterungskatalysator und 3-Isopropenyl-α, α-dimetylbenzyl-isocyanat (TMI) (0,8 mol per mol Basispolyol) gegeben. Das Gemisch wurde für eine weitere Stunde bei 80°C gerührt. Anschließend wurde Phosphorsäure zur Deaktivierung des Katalysators zugegeben und das Produkt auf 25°C abgekühlt und mit Antioxidanzien stabilisiert.

### Bestimmung der Viskosität

Die Viskosität der Polyole bei 25°C wurde mit einem Rotationsviskosimeter Rheotec RC 20 unter Verwendung der Spindel CC 25 DIN (Spindel-Durchmesser: 12,5 mm, Messzylinder-Innendurchmesser: 13,56 mm) bei einer Scherrate von 50 1/s bestimmt.

### Bestimmung des Feststoffgehaltes

Der Feststoffgehalt der Graftpolyole und Graftpolyol-Mischungen wurde gravimetrisch ermittelt. Dazu wurden ca. 2 g Graftpolyol mit ca. 80 g Isopropanol in einem Zentrifugenröhrchen fein dispergiert. Anschließend wurde der Feststoff in einer Hochgeschwindigkeitszentrifuge Sorvall RC 26 Plus bei 20000 U/min (44670 g) abgetrennt. Nach Dekantieren der sich über dem Feststoff befindlichen flüssigen Phase wurde der Feststoff noch weitere zweimal in Isopropanol redispergiert, gefolgt vom Zentrifugieren und dem Abtrennen der flüssigen Phase. Nach Trocknen des Feststoffes bei 80°C und einem Druck von < 1 mbar für mindestens zwei Stunden in einem Vakuumtrockenschrank wurde der prozentuale Feststoffgehalt aus der Masse des abgetrennten Feststoffes und der Masse des eingesetzten Graftpolyols berechnet.

### Beispiel 1: Synthese eines Graftpolyols mit breiter Teilchengrößenverteilung

Zur Herstellung von Graftpolyol 1 (GP 1) nach dem kontinuierlichen Verfahren unter Druck wurde ein 300 ml Rührrreaktor mit kontinuierlichem Zu- und Abfluss eingesetzt. Der Reaktor wurde vor dem Reaktionsstart vollständig mit Polyol 2 oder Graftpolyol aus der vorhergehenden Synthese gefüllt und unter intensivem Rühren auf Synthesetemperatur von 133°C erwärmt. Die Reaktionsmischung wurde in zwei Dosierbehältern bereitgestellt und mit den angegebenen Dosiergeschwindigkeiten über einen statischen In-line-Mixer über eine Öffnung am Reaktorboden in den Reaktor gepumpt.

| Dosierstrom 1 | Dosiergeschwindigkeit: 14,54 g/min |
|---|---|
| Acrylnitril | 449,96 g |
| Styren | 900,05 g |
| Isopropanol | 202,50 g |

| Dosierstrom 2 | Dosiergeschwindigkeit: 15,46 g/min |
|---|---|
| Polyol 2 | 1578,45 g |
| Makromer 2 | 60,75 g |
| Initiator 2 | 10,80 g |

Gleichzeitig wurde das Rohgraftpolyol über ein regelbares, federbelastetes Rückhalteventil am Reaktorkopf entnommen. In der Startphase wurde das erhaltene Produkt verworfen. Der kontinuierliche Zustand wird üblicherweise nach 10-maligem Austausch des Reaktorinhaltes (10 turn over), das entsprach ca. 3000 ml, erreicht.. Das den Reaktor verlassende Rohgraftpolyol wurde in einem Glaskolben aufgefangen und anschließend bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidanzien stabilisiert. GP 1 hatte eine Viskosität von 13000 mPas bei einem Feststoffgehalt von 45,0 Gew.-% und zeichnete sich durch eine breite Teilchengrößen-verteilung entsprechend Bild 1 aus.

### Beispiel 2: Synthese von Graftpolyolen mit monomodaler Teilchengrößenverteilung (Tabelle 1)

Die Herstellung der Graftpolyole mit monomodaler Teilchengrößenverteilung nach dem Semi Batch Verfahren erfolgte in einem 2 Liter Autoklaven, ausgestattet mit 2-stufigem Rührwerk, innenliegenden Kühlschlangen und elektrischem Heizmantel. Vor Beginn der Reaktion wurde der Reaktor mit einem Gemisch aus Carrierpolyol und Macromer befüllt, mit Stickstoff gespült und auf Synthesetemperatur von 125°C erwärmt. Bei einigen Synthesen wurde der Reaktionsvorlage neben dem Carrierpolyol und dem Macromer zusätzlich ein Graftpolyol als Saat zugesetzt. Bei einer weiteren Gruppe von Versuchen wurde nur ein Teil des Macromers im Reaktor vorgelegt. Die verbleibende Menge wurde während der Synthese über einen unabhängigen Dosierstrom in den Reaktor überführt. Beginn und Ende der Macromerdosierung sind Tabelle 1 zu entnehmen.

Der restliche Teil der Reaktionsmischung, bestehend aus weiterem Carrierpolyol, Initiator, den Monomeren und dem Reaktionsmoderator, wurde in zwei Dosierbehältern vorgelegt. Die Synthese der Graftpolyole erfolgte durch Überführen der Rohstoffe aus den Dosierbehältern mit konstanter Dosiergeschwindigkeit über einen statischen In-Line-Mischer in den Reaktor. Die Dosierdauer für das Monomer-Moderator-Gemisch betrug 150 Minuten, während das Polyol-Initiator-Gemisch über 165 Minuten in den Reaktor dosiert wurde. Nach.weiteren 10 bis 30 Minuten Nachreaktionszeit bei Reaktionstemperatur wurde das Rohgraftpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidanzien stabilisiert.

### Beispiel 3: Herstellung von Graftpolyolen mit bimodaler Teilchengrößenverteilung durch Mischen von Graftpolyolen mit monomodaler Teilchengrößenverteilung (Tabelle 2)

Graftpolyole mit deutlich separierter, bimodaler Teilchengrößenverteilung wurden durch Mischen von Graftpolyolen mit enger, monomodaler Teilchengrößenverteilung und unterschiedlichen Teilchengrößen hergestellt. Das Mischen der Graftpolyole erfolgte in einem Rührbehälter mit Vollrath-Scheibenrührer. Jedoch können alle bekannten Mischverfahren (kontinuierlich bzw. diskontinuierlich) zum Einsatz kommen. Da durch das Mischen eventuell Luft in das Gemisch eingetragen werden kann, ist es vorteilhaft, die Untersuchung der Graftpolyolmischungen erst 24 Stunden nach Herstellung der Mischung zu beginnen.

Graftpolyolmischungen, hergestellt aus Graftpolyolen mit enger, monomodaler Teilchengrößenverteilung, annähernd gleichem Feststoffgehalt und basierend auf dem gleichen Carrierpolyol, zeigt Tabelle 2, Beispiele A - C. Deutlich ist die Abhängigkeit der Viskosität vom Mischungsverhältnis und damit vom Verhältnis (vol-%) von kleinen zu großen Teilchen zu erkennen.

Zum Mischen wurden aber auch Graftpolyole mit einer monomodalen Teilchengrößenverteilung eingesetzt, die sich in der Reaktivität und der Viskosität des Carrierpolyols unterschieden (Tabelle 2, D). Durch die unterschiedliche Reaktivität der Carrierpolyole war es möglich, in Abhängigkeit vom Mischungsverhältnis gleichzeitig das Schäumverhalten zu beeinflussen. Die Viskosität der Graftpolyolmischung wurde in diesem Beispiel durch das Verhältnis von kleinen und großen Teilchen und das Verhältnis der unterschiedlich viskosen Carrierpolyole bestimmt.

### Beispiel 4: Synthese von Graftpolyolen mit bimodaler Teilchengrößenverteilung (Tabelle 3)

Graftpolyole mit der erfindungsgemäßen, bimodalen Teilchengrößenverteilung wurden auch direkt im Semi Batch Verfahren hergestellt, wobei die gleiche Reaktionsapperatur wie in Beispiel 2 zum Einsatz kam. Vor Beginn der Reaktion wurde der Reaktor mit einem Gemisch aus Carrierpolyol, Macromer und dem Saatgraftpolyol befüllt, mit Stickstoff gespült und auf Synthesetemperatur von 125°C erwärmt. Der restliche Teil der Reaktionsmischung, bestehend aus weiterem Carrierpolyol, Initiator, den Monomeren und dem Reaktionsmoderator, wurde in mindestens zwei Dosierbehältern vorgelegt. Bei einigen Synthesen wurde nur ein Teil des Macromers im Reaktor vorgelegt und die verbleibende Menge während der Reaktion über einen unabhängigen Dosierstrom in den Reaktor dosiert. Beginn und Ende der Macromerdosierung sind Tabelle 3 zu entnehmen. Die Synthese der Graftpolyole erfolgte durch Überführen der Rohstoffe aus den Dosierbehältern mit konstanter Dosiergeschwindigkeit über einen statischen In-Line-Mischer in den Reaktor. Die Dosierdauer für das Monomer-Moderator-Gemisch betrug 150 Minuten, während das Polyol-Initiator-Gemisch über 165 Minuten in den Reaktor dosiert wurde. Nach weiteren 15 Minuten Nachreaktionszeit bei Reaktionstemperatur wurde das Rohgraftpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidanzien stabilisiert.

**Tabelle 1: Synthese von Graftpolyolen (GP) mit monomodaler Teilchengrößenverteilung**

| **Versuchsnummer** | **GP 2** | **GP 3** | **GP 4** | **GP 5** | **GP 6** | **GP 7** | **GP 8** | **GP 9** | **GP 10** | **GP11** |
|---|---|---|---|---|---|---|---|---|---|---|
| **Reaktionsvorlage (g)** | | | | | | | | | | |
| Polyol 1 | - | - | - | 396,44 | 387,76 | 387,67 | 396,56 | 395,42 | 365,11 | 367,07 |
| Polyol 2 | 570,67 | 571,83 | 360,64 | - | - | - | - | - | - | - |
| Macromer 1 | - | - | 23,67 | 20,90 | 21,54 | 21,54 | 17,79 | 21,01 | - | - |
| Macromer 2 | 24,82 | 23,17 | - | - | - | - | - | - | - | - |
| Macromer 3 | - | - | - | - | - | - | - | - | 2,75 | 1,00 |
| Graftpolyol-Name | - | - | GP 7 | - | - | - | - | GP 5 | - | - |
| - Menge | | | 188,12 | | | | | 132,33 | | |

| **Dosierstrom 1 (g)** | | | | | | | | | | |
|---|---|---|---|---|---|---|---|---|---|---|
| Acrylnitril | 183,85 | 183,85 | 207,65 | 184,31 | 189,91 | 189,91 | 185,25 | 185,25 | 203,38 | 203,45 |
| Styren. | 367,75 | 367,75 | 415,35 | 368,69 | 379,89 | 379,89 | 370,55 | 370,55 | 406,81 | 406,95 |
| Dodecanthiol | 5,57 | 5,57 | 6,54 | 5,81 | 5,98 | 6,21 | 5,84 | 5,61 | 6,41 | 6,41 |

| **Dosierstrom 2 (g)** | | | | | | | | | | |
|---|---|---|---|---|---|---|---|---|---|---|
| Polyol 1 | - | - | - | 421,30 | 412,07 | 411,98 | 421,43 | 420,21 | 388,00 | 390,09 |
| Polyol 2 | 244,57 | 245,07 | 383,25 | - | - | - | - | - | - | - |
| Initiator 1 | - | - | 2,90 | - | - | 2,80 | 2,58 | - | 2,84 | 2,84 |
| Initiator 2 | - | - | - | - | 2,85 | - | - | - | - | - |
| Initiator 3 | 2,76 | 2,76 | - | 2,54 | - | - | - | 1,95 | - | - |

| **Dosierstrom 3 (g)** | | | | | | | | | | |
|---|---|---|---|---|---|---|---|---|---|---|
| Macromer 3 | - | - | - | - | - | - | - | - | 24,71 | 22,20 |
| Dosierzeit (min) | | | | | | | | | 10-30 | 20-30 |
| **Total (g)** | 1400,00 | 1400,00 | 1588,12 | 1400,00 | 1400,00 | 1400,00 | 1400,00 | 1532,33 | 1400,00 | 1400,00 |

| **Graftpotyoteigenschaften** | | | | | | | | | | |
|---|---|---|---|---|---|---|---|---|---|---|
| Feststoffgehalt (Gew.-%) * | 40,00 | 40,0 | 45,0/40,0 | 39,9 | 40,9 | 41,0 | 40,1 | 40,0 | 44,0 | 44,1 |
| Viskosität (mPas) * | 11200 | 9310 | 10420 / 6300 | 4640 | 4990 | 4950 | 4550 | 4120 | 5480 | 5250 |
| Teilchengröße (Mode-Wert) (µm) | 0,2 | 0,35 | 0,9 | 0,3 | 0,35 | 0,35 | 0,5 | 0,8 | 0,9 | 1,1 |
| Anteil Feststoffgehalt d. Graftpolyols in Reaktionsvorlage am Feststoffgehalt des resultierenden Graftpolyols (%) | - | - | 10,79 | - | - | - | - | 8,61 | - | - |

| | | | | | | | | | | |
|---|---|---|---|---|---|---|---|---|---|---|
| * = Feststoffgehalt bzw. Viskosität nach Synthese / Feststoffgehalt bzw. Viskosität nach Verdünnen mit weiterem Carrierpolyol | | | | | | | | | | |

**Tabelle 2: Graftpolyol-Mischungen (GM) mit bimodaler Teilchengrößenverteilung, hergestellt aus Graftpolyolen mit monomodaler Teilchengrößenverteilung**

| Versuchsserie | Name der Mischung | Mischung aus | Kleine Teilchen Anteil Polyol A (Gew.-%) | Große Teilchen Anteil Polyol B (Gew.-%) | Viskosität (mPas) |
|---|---|---|---|---|---|
| A | GM 1 | | 0 | 100 | 4120 |
| | GM2 | Polyol A = GP 5 | 20 | 80 | 3610 |
| | GM 3 | und | 30 | 70 | 3500 |
| | GM 4 | Polyol B = GP 9 | 40 | 60 | 3570 |
| | GM 5 | | 50 | 50 | 3750 |
| | GM 6 | | 100 | 0 | 4640 |
| B | GM 7 | | 0 | 100 | 6300 |
| | GM 8 | Polyol A = GP 2 | 20 | 80 | 5130 |
| | GM 9 | und | 30 | 70 | 4780 |
| | GM 10 | Polyol B = GP 4 | 40 | 60 | 5050 |
| | GM 11 | | 50 | 50 | 5920 |
| | GM 12 | | 100 | 0 | 11200 |
| C | GM 13 | | 0 | 100 | 6300 |
| | GM 14 | Polyol A = GP 3 | 20 | 80 | 5200 |
| | GM 15 | und | 30 | 70 | 5011 |
| | GM 16 | Polyol B = GP 4 | 40 | 60 | 5150 |
| | GM 17 | | 50 | 50 | 5680 |
| | GM 18 | | 100 | 0 | 9310 |
| D | GM 19 | | 0 | 100 | 6300 |
| | GM 20 | Polyol A = GP 5 | 20 | 80 | 4880 |
| | GM 21 | und | 30 | 70 | 4558 |
| | GM 22 | Polyol B = GP 4 | 40 | 60 | 4518 |
| | GM 23 | | 50 | 50 | 4835 |
| | GM 24 | | 100 | 0 | 4640 |

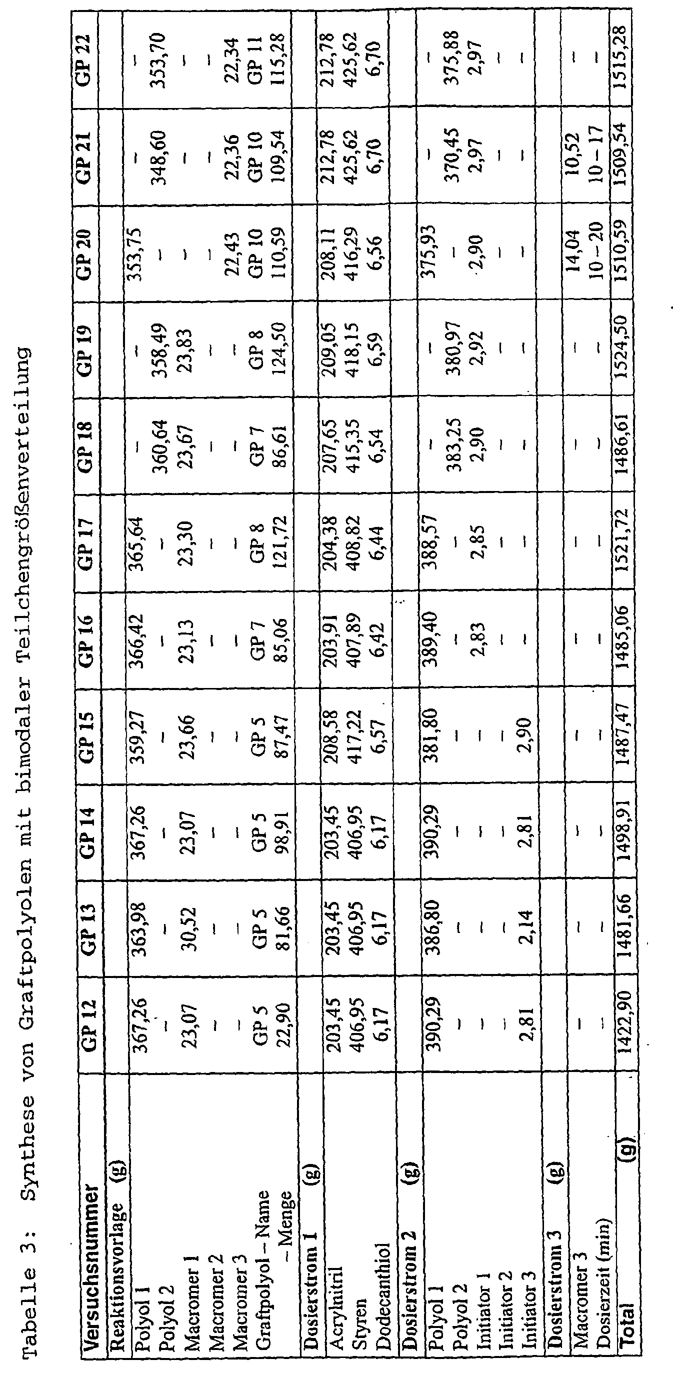

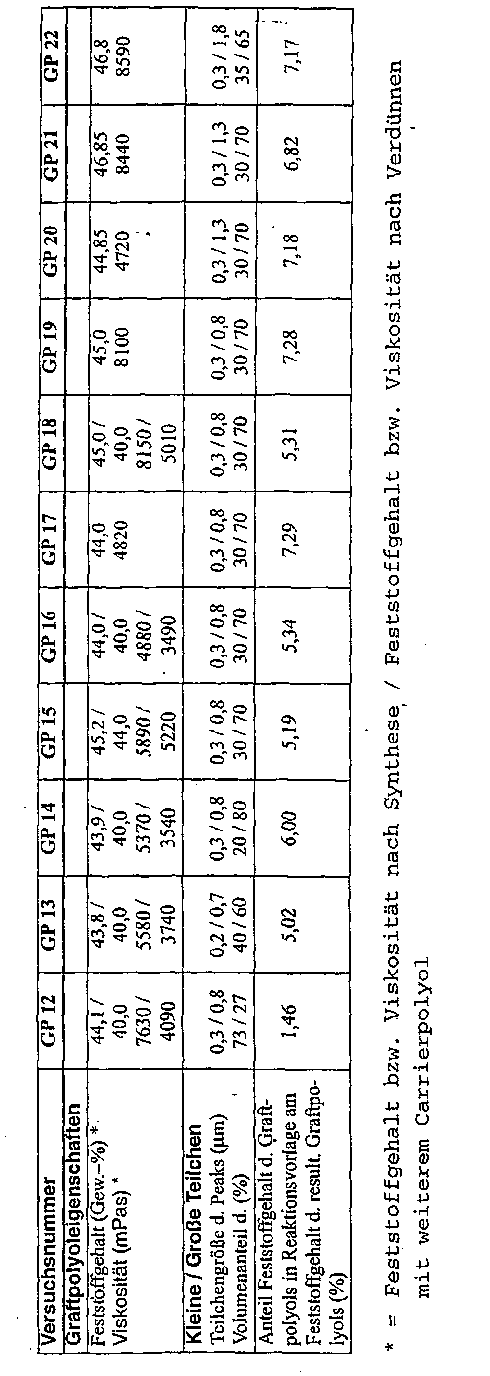

Vergleich der Polyol- und Schaum-Eigenschaften von Graftpolyolen mit breiter Teilchengrößenverteilung, monomodaler Teilchengrößenverteilung und bimodaler Teilchengrößenverteilung

### Polyol-Eigenschaften

Graftpolyole mit bimodaler Teilchengrößenverteilung zeichnen sich gegenüber Graftpolyolen mit monomodaler Teillchengrößenverteilung und Graftpolyolen mit breiter Teilchengrößenverteilung durch eine niedrigere Viskosität bei gegebenem Feststoffgehalt aus.

Die Graftpolyole GP 1 und GP 19 basieren auf dem gleichen Carrierpolyol (Polyol 2) und haben beide einen Feststoffgehalt von 45 Gew.-%. Trotzdem hat das Graftpolyol GP 19 mit bimodaler Teilchengrößenverteilung mit einer Viskosität von 8100 mPas im Vergleich zu GP 1 mit einer breiten Teilchengrößenverteilung und einer Viskosität von 13000 mPas eine um ca. 38 % niedrigere Viskosität.

Auch im Vergleich zu Graftpolyolen mit einer engen monomodalen Teilchengrößenverteilung zeichnen sich Graftpolyole mit einer bimodalen Teilchengrößenverteilung durch eine niedrigere Viskosität aus. Dabei ist es gleichgültig, ob die bimodale Teilchengrößenverteilung durch Mischen von zwei Graftpolyolen mit monomodaler Teilchengrößenverteilung oder direkt während der Synthese entstanden ist.

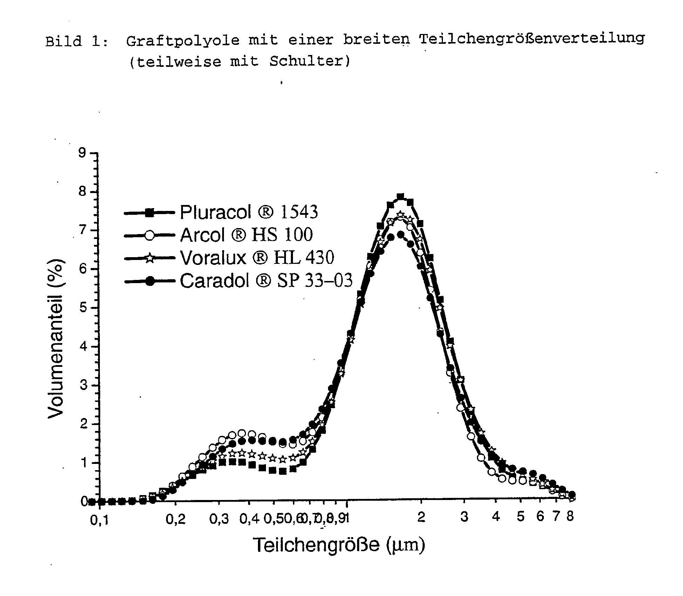

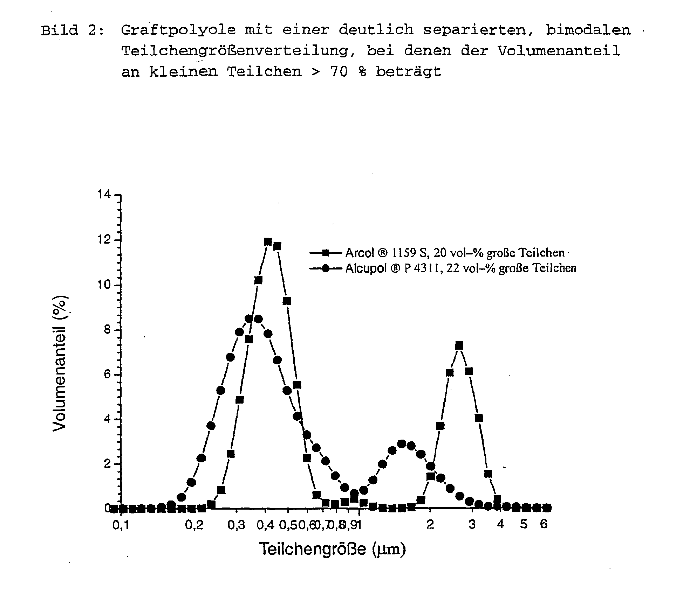

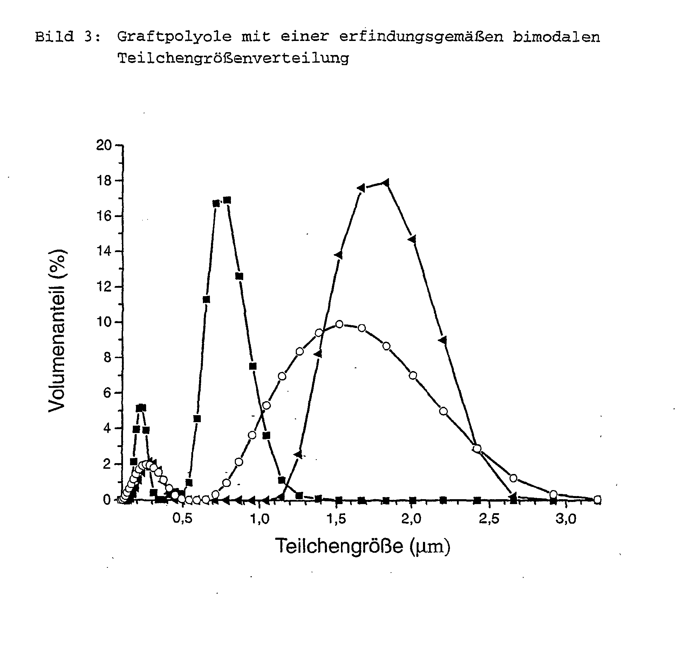

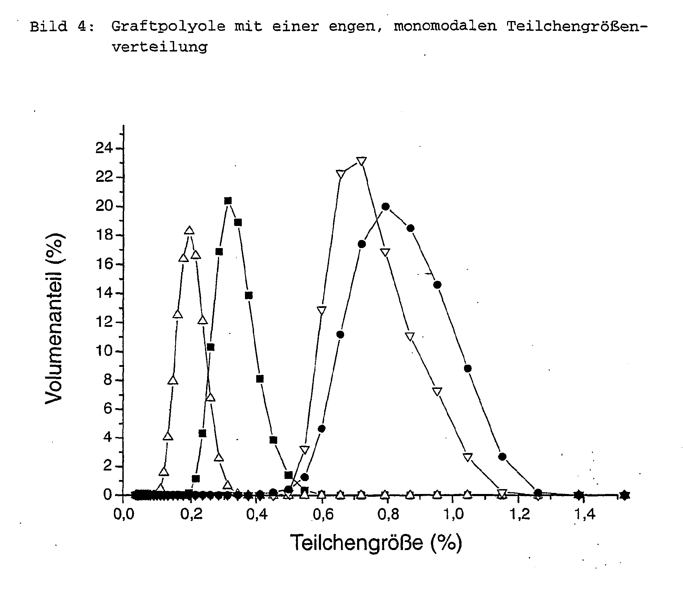

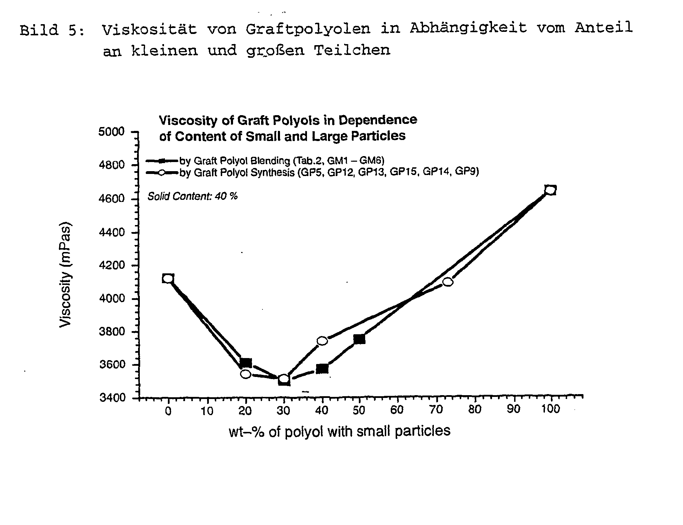

Abb. 5 zeigt, dass der Abfall der Viskosität vom Volumenanteil der kleinen und großen Teilchen in der Teilchengrößenverteilung abhängt. Auch die Versuchsserien B und C in Tabelle 2 verdeutlichen, dass die Viskosität bei einem Anteil von 30 vol-% kleinen Teilchen und 70 vol-% großen Teilchen in der Teilchengrößenverteilung auf ein Minimum fällt.

Der Abfall der Viskosität beträgt mindestens 5 %, besonders bevorzugt 12 bis 30 % (z. B. Vergleich GM 1 mit GM 3 und GP 7 mit GP 16) und erreichte in einigen Fällen bis 45 % und mehr (z. B. Vergleich GP 2 und GP 3 mit GP 18).

Die erfindungsgemäßen Graftpolyole mit einer bimodalen Teilchengrößenverteilung besitzen ein besseres Fließverhalten unter Scherbelastung. Deutlich zeigte sich dies beim Filtrieren der Graftpolyole bzw. der Graftpolyolmischungen. Die Filtrationsversuche wurden im 25 t-Maßstab mit 3 parallel geschalteten Filtern der Fa. Ronningen & Petter (Typ CF-1600) und Multi-Layer-Filtereinsätzen durchgeführt. Die Porengröße der Filtereinsätze zeigt Tabelle 4.

**Tabelle 4: Vergleich der Filtrierbarkeit der Graftpolyole**

| Graftpolyol | **GP 1** | **GP 19** |
|---|---|---|
| Carrierpolyol | Polyol 2 | |
| Festoffgehalt (Gew.-%) | 45,0 | 45,0 |
| Viskosität (mPas) | 13000 | 8100 |
| Porengröße d. Filter (µm) | 50 x 50 | 25 x 25 |
| Filtrationsgeschwindigkeit (t/h) | < 1 | 4 |
| | | |

| | **GP 7** | **GP 17** |
|---|---|---|
| Carrierpolyol | Polyol 1 | |
| Feststoffgehalt (Gew.-%) | 41 | 44 |
| Viskosität (mPas) | 4.950 | 4.820 |
| Porengröße d. Filter (µm) | 25 x 25 | 25 x 25 |
| Filtrationsgeschwindigkeit (t/h) | 3 | 6 |

Aufgrund der niedrigeren Viskosität und der bimodalen Teilchengrößenverteilung ließ sich das Graftpolyol GP 19 durch 4-fach feinere Filter (kleinere Poren) mit einer 4-fach höheren Geschwindigkeit im Vergleich zum Graftpolyol GP 1 mit einer breiten Teilchengrößenverteilung reinigen (Tabelle 4). Beide Graftpolyole basieren auf dem gleichen Carrierpolyol.

Die Graftpolyole GP 7 (monomodal) und GP 17 (bimodal) besitzen nahezu die gleiche Viskosität. Jedoch beträgt der Feststoffgehalt von GP 17 bei dieser Viskosität 44 Gew.-%, während das Graftpolyol GP 7 nur 41 Gew.-% Feststoff enthält. Wie Tabelle 4 zeigt, konnte trotz des höheren Feststoffgehaltes von GP 17 mit einer höheren Geschwindigkeit im Vergleich zu GP 7 gefiltert werden.

Bei gleicher Filterfläche zeichnen sich Graftpolyole mit einer bimodalen Teilchengrößenverteilung im Vergleich zu Graftpolyolen mit einer monomodalen bzw. breiten Teilchengrößenverteilung durch eine höhere Filtrationsgeschwindigkeit aus. Im Umkehrschluss ist es jedoch auch möglich, dass vergleichbare Filtrationsgeschwindigkeiten bei Graftpolyolen mit der erfindungsgemäßen bimodalen Teilchengrößenverteilung mit geringeren Filterflächen realisiert werden können.

### Beispiel 5: Verarbeitung und Schaumstoffeigenschaften

### Rezepturen und Testmethoden (Tabellen 5 - 8)

Graftpolyole mit der erfindungsgemäßen bimodalen Teilchengrößenverteilung wurden im Vergleich zu Graftpolyolen mit einer monomodalen bzw. breiten Teilchengrößenverteilung in Blockweichschaum- und Formweichschaum-Rezepturen miteinander verglichen. Die zum Einsatz gelangten Rohstoffe, die Rezepturen für die jeweiligen Schaumtypen sowie die Prüfmethoden zur Beurteilung des Schäumverhaltens bzw. der Schaumeigenschaften zeigen die Tabellen 5 - 8.

**Tabelle 5: Formulierungen und Rohstoffe für die Austestung von nichtreaktiven Graftpolyolen im Blockweichschaum (Conventional Slab Foam)**

| **Formulierung** (Angaben in Gewichtsteilen) | **HLBI*)** | **HLBII**)** |
|---|---|---|
| Brutto-Schaumdichte (kg/m³) | 35 | 25 |
| Graftpolyol GP/GM (s. Tabellen 1-3) + Polyol 1 | 100,00 | 100,00 |
| Wasser | 2,90 | 4,30 |
| Tegostab B 4900 1) | 0,95 | 1,00 |
| Lupragen N 201²⁾ (3:1) | 0,14 | 0,10 |
| Lupragen N 206 ³⁾ Zinnoktoat | 0,18 | 0,24 |
| Lupranat T 80 ⁴⁾ (Index) | 112 | 110 |

| | | |
|---|---|---|
| *) siehe auch Tabelle 9 | | |
| **) siehe auch Tabelle 10 | | |
| 1) Silikonstabilisator, Goldschmidt AG | | |
| 2) 1,4-Diazabicyclo[2.2.2]octan, BASF AG | | |
| 3) Bis(2-dimethylaminoethyl)ether, BASF AG | | |
| 4) Toluylendüsocyanat; 80 % 2,4- und 20 % 2,6-Isomeres, BASF | | |

**Tabelle 6: Formulierungen und Rohstoffe für die Austestung von reaktiven Graftpolyolen im Blockweichschaum (High Resilience Slab Foam)**

| **Formulierung** (Angaben-in Gewichtsteilen) | **HRI*)** | **HRII*)** | **HRIII*)** |
|---|---|---|---|
| Graftpolyol GP/GM (s. Tabellen 1 - 3) : Polyol 2 | 100,00 (25 % bzw. 15 % Feststoffanteil) | | |
| DEOA ¹⁾ | 1,30 | 1,30 | 1,20 |
| Lupragen VP 9600 ²⁾ | 2,00 | 2,00 | 1,00 |
| Wasser (gesamt) | 2,50 | 2,50 | 2,50 |
| Tegostab B 4380 ³⁾ | 1,00 | 1,00 | 1,00 |
| Lupragen N 201 ⁴⁾ | 0,20 | 0,18 | 0,04 |
| Lupragen N 206 ⁵⁾ | 0,03 | - | - |
| Zinnoktoat | 0,12 | 0,15 | 0,18 |
| Lupranat T 80⁶) (Index) | 110 | 110 | 105 |

| | | | |
|---|---|---|---|
| *) siehe auch Tabelle 11 | | | |
| 1) Diethanolamin als 80 %ige wässrige Lösung; BASF AG | | | |
| 2) Vernetzungsmittel, 75 %ige wässrige Mischung verschiedener Polyalkohole mit primären OH-Gruppen; Hydroxylzahl: 650 mg KOH/g, Viskosität bei 25 °C: 480 mPas | | | |
| 3) Silikonstabilisator, Goldschmidt AG | | | |
| 4) 1,4-Diazabicyclo[2.2.2]octan, BASF AG | | | |
| 5) Bis(2-dimethylaminoethyl)ether, BASF AG | | | |
| 6) Toluylendiisocyanat, 80 % 2,4- und 20 % 2,6-Isomeres, BASF AG | | | |

**Tabelle 7: Formulierungen und Rohstoffe für die Austestung von reaktiven Graftpolyolen im Formweichschaum (Molded Foam)**

| **Rohstoffe** (Angaben in Gewichtsteilen) | **FWI*)** | **FW II*)** | **FW III *)** |
|---|---|---|---|
| Polyol 2 | 70,4 | 62,83 | 64,63 |
| Polyol 3 | 4 | 1,8 | - |
| Graftpolyol (Feststoff 45 %) | 20,5 | 30,6 | 30,6 |
| DEOA ¹⁾ | 0,8 | - | - |
| Glycerol | - | 0,3 | 0,3 |
| N 201 ²⁾ | - | 0,51 | 0,51 |
| NAX A1 ³⁾ - | - | 0,11 | 0,11 |
| N 211⁴⁾ | 0,3 | - | - |
| Dabco X 8154⁵⁾ | 0,7 | - | - |
| Dabco XDM ⁶⁾ | 0,2 | - | - |
| Tegostab B 4690 ⁷⁾ | 0,4 | - | - |
| Tegostab B 8680 ⁸⁾ | - | 0,15 | 0,15 |
| Wasser | 2,7 | 3,1 | 3,1 |
| Isocyanat 1⁹⁾ | 44,4 | - | - |
| Isocyanat 2 ¹⁰) | - | 41,1 | 41,1 |

| | | | |
|---|---|---|---|
| *) siehe auch Tabelle 12 | | | |
| 1) Diethanolamin als 80 %ige wässrige Lösung, BASF AG | | | |
| 2) 1,4-Diacabicyclo(2.2.2)octan, BASF AG | | | |
| 3) Katalysator Fa. Air Products | | | |
| 4) Dimethylaminopropylamin, BASF AG | | | |
| 5) Katalysator Fa. Air Products | | | |
| 6) Katalysator Fa. Air Products | | | |
| 7) Stabilisator Fa. Goldschmidt | | | |
| 8) Stabilisator Fa. Goldschmidt | | | |
| 9) Isocyanatmischung aus 2,4-, 4,4'-MDI und PMDI, NCO-Gehalt: 33 Gew.-% | | | |
| 10) Isocyanatmischung aus Lupranat® T 80 und PMDI, NCO-Gehalt: 45 Gew.-% | | | |

**Tabelle 8: Prüfungen zur Beurteilung des Schäumverhaltens und der Schaumstoffqualität**

| Prüfwert | Bedingung | Dimension | Norm |
|---|---|---|---|
| Zellöffnungsverhalten ZÖV | 1=sehr stark 2=stark | Note | |
| | 3=moderat 4=wenig | | |
| Rohdichte | | kg/m³ | DIN EN ISO 845 |
| Zugfestigkeit | | kPa | DIN EN ISO 1798 |
| Reißdehnung | | % | DIN EN ISO 1798 |
| Stauchhärte | 40% Stauchung | kPa | DIN EN ISO 3386 |
| Druckverformungsrest | 70°C/22h, 50% Stauchung | % | DIN EN ISO 1856 |
| Wet Compression Set | 22h/50°C/70%/95%LF | % | ISO 1856 (-mod.) |
| Rückprallelastizität | Pendeltest | % | DIN 53573 |
| Weiterreißfestigkeit | | N/mm | DIN53515 |
| Eindruckhärte Methode B | 40 % Stauchung | N | DIN EN ISO 2439, B |
| Stauchhärte | | kPa | DIN EN ISO 3386-1/2 |
| SAG-Faktor | | - | Verhältnis der Eindruckhärte bei 65% zur Eindruckhärte bei 25% |
| Offenzelligkeit | | N | Maß der Kraft , die benötigt wird, um ein ungewalktes Prüfltissen auf 65% zu stauchen (3x1 Stauchung auf 65% mit Prüftellerdurchmesser 200mm) |
| Fogging | Gravimetrische Methode | mg | DIN 75201B |
| VOC | Bestimmung von gasförmigen und kondensierbaren Emissionen mittels automatischer Thermodesorption | ppm | DaimlerChrysler Prüfanweisung "Analyse der Emission flüchtiger und kondensierbarer Substanzen aus Fahrzeuginnenausstattungsmaterialien mittels Thermodesorption" Nr. PB VWL 709 - Ausgabe: 11. 01. 2001 bzw. VDA 278 |
| Fogging | | ppm | |

Die Tabellen 9-12 zeigen die Ergebnisse der Schaumuntersuchungen. Dabei wurden Graftpolyole mit der erfindungsgemäßen bimodalen Teilchengrößenverteilung sowie mit breiter bzw. monomodaler Teilchengrößenverteilung in Blockschaum- und Formweichschaum-rezepturen miteinander verglichen.

### Beispiel 5.1: Ergebnisse Blockschaum (Tabellen 9 - 11)

Beim Einsatz der Graftpolyole mit der erfindungsgemäßen, bimodalen Teilchengrößenverteilung im Vergleich zu Graftpolyolen mit breiten und mit monomodalen Teilchengrößenverteilungen in den Rezepturen HLB I und HLB II unterschieden sich die Schaumeigenschaften kaum. Es wurde jedoch ein verstärktes Zellöffnungsverhalten beobachtet, was aber ohne Einfluss auf die Aushärtephase und die Endstabilität der Schaumstoffe bleibt (Tabellen 9 und10). Die Graftpolyole mit der erfindungsgemäßen bimodalen Teilchengrößenverteilung können unter den unterschiedlichsten äußeren Bedingungen, die normalerweise Rezepturanpassungen erfordern, über einen weiten Zinnoktoat-Bereich verschäumt werden, ohne dass eine Neigung zu Schrumpf oder Rissbildung zu beobachten ist.

Auch im HR-Blockschaum (HR I) unterschieden sich das Schäumverhalten und die Schaumeigenschaften von GP 1 und GP 4 im Vergleich zu GP 18, GP 19 und GM 14, GM 15 nur geringfügig. Auffallend war das stärkere Zellöffnungsverhalten der bimodalen Graftpolyole GP 18, GP 19 und GM 14, GM 15 im Vergleich zu GP 1 und GP 4, das wahrscheinlich auf der veränderten Teilchengrößenverteilung beruht. Um eine Instabilität der Schaumstoffblöcke im Moment der Zellöffnung zu vermeiden, wurde durch Optimierung der Formulierung bezüglich der Aktivierung entgegengewirkt (Verhältnis Treibzu Vernetzungskatalyse geändert, aus HR I wurde HR II). Die starke Zellöffnung hat positiv zur Folge, dass der zum Walken der Schäume erforderliche Aufwand, der der nachträglichen und vollständigen Zellöffnung dient, reduziert und der Weiterverarbeitungsprozess erleichtert werden kann. Noch bessere Ergebnisse bezüglich der Prozessparameter werden erzielt, wenn die Vernetzungsmittel nach unten korrigiert werden (HR III).,

Neben der guten Prozessbreite zeichnet sich GP 21 dadurch aus, dass bei gleichem Feststoffgehalt eine höhere Härte erzielt wird, wodurch es möglich ist, den Feststoffgehalt und/oder den TDI-Index zu senken, was in beiden Fällen zu einer Einsparung führt. Positiv ist auch zu bewerten, dass der Wet Compression Set sinkt und der SAG-Faktor steigt.

Graftpolyole (nichtreaktiv) mit der erfindungsgemäßen bimodalen Teilchengrößenverteilung zeichnen sich durch ein verbessertes Filtrationsverhalten aus. Im Vergleich zu GP 7 (monomodal) konnte GP 17 (bimodal) auf einer Flüssig-CO₂-Schäummaschine vom Typ Nova-Flex verarbeitet werden, ohne dass ein nennenswerter Druckanstieg im Mischkopf der Maschine angezeigt wurde.

**Tabelle 9: Testung nichtreaktiver Graftpolyole mit monomodaler und bimodaler Teilchengrößenverteilung im Blockschaum (Formulierung HLB I)**

| **Formulierung HLBI*) mit** | **GP 5** | **GP 6** | **GP 7** | **GP 15** | **GM 3** | **GP 16** | **GP 17** | **GP 20** |
|---|---|---|---|---|---|---|---|---|
| Feststoffgehalt GP/GM (Gew.-%) | 39,9 | 40,9 | 41,0 | 45,2 | 40,0 | 44,0 | 44,0 | 44,85 |
| Viskosität bei 25°C (mPas) | 4640 | 4990 | 4950 | 5890 | 3500 | 4880 | 4820 | 4720 |
| Graftpolyol GP/GM + Polyol 1 **) | 100 | 100 | 100 | 100 | 100 | 100 | 100 | 100 |
| Feststoffgehalt der Mischung (Gew.-%) | 10 | 10 | 10 | 10 | 10 | 10 | 10 | 10 |
| Formulierungsänderungen | keine | keine | 0,14 N 201, ohne N 206 | keine | keine | 0,20 MT Zinnoktoat | 0,21 MT Zinnoktoat | 0,21 MT Zinnoktoat |
| **Verschäumungseigenschaften** | abgeblasen, ZÖV 2 | abgeblasen, ZÖV 2 | abgeblasen, ZÖV 3 | gut abgeblasen, ZÖV 1 | gut abgeblasen, ZÖV 2 | mäßig abgeblasen, ZÖV 3 | gut abgeblasen, ZÖV 3 | gut abgeblasen, ZÖV 3 |

| **Schaumstoffeigenschaften** | | | | | | | | |
|---|---|---|---|---|---|---|---|---|
| Rohdichte | 31,0 | 31,0 | 31,9 | 30,6 | 31,1 | 30,9 | 30,3 | 31,0 |
| Stauchhärte | 5,1 | 5,9 | 5,4 | 5,5 | 5,4 | 5,5 | 6,3 | 6,4 |
| Zugfestigkeit | 88 | 100 | 103 | 100 | 102 | 94 | 98 | 93 |
| Reißdehnung | 91 | 99 | 110 | 104 | 106 | 98 | 87 | 78 |
| Druckverfonnungsrest | 3,0 | 2,0 | 0,6 | 2,5 | 2,3 | 2,0 | 2,2 | 1,4 |
| Wet Compression Set | 5,0 | 3,4 | 1,6 | 3,3 | 3,1 | - | 4,3 | 3,8 |
| Rückprallelastizität | 46 | 48 | 48 | 47 | 47 | 36 | 52 | 51 |
| Fogging (DIN) | ø0,2 | ø0 | ø0,4 | ø0,3 | ø0,3 | ø0,7 | - | ø0,3 |
| VOC | ø358 | ø354 | ø350 | ø287 | ø300 | ø338 | - | ø386 |
| Fogging | ø30 | ø22 | ø50 | ø20 | ø32 | ø117 | - | ø55 |

| | | | | | | | | |
|---|---|---|---|---|---|---|---|---|
| *) Rezeptur siehe Tabelle 5 | | | | | | | | |
| **) Angaben in Gewichtsteilen | | | | | | | | |

**Tabelle 10: Testung nichtreaktiver Graftpolyole mit monomodaler und bimodaler Teilchengrößenverteilung im Blockschaum (Formulierung HLB II)**

| **Formulierung HLB II *) mit** | **GP 5** | **GP 6** | **GP 7** | **GP 15** | **GM 3** | **GP 16** | **GP 17** | **GP 20** |
|---|---|---|---|---|---|---|---|---|
| Feststoffgehalt GP/GM (Gew.-%) | 39,9 | 40,9 | 41,0 | 45,2 | 40,0 | 44,0 | 44,0 | 44,85 |
| Viskosität bei 25°C (mPas) | 4640 | 4990 | 4950 | 5890 | 3500 | 4880 | 4820 | 4720 |
| Graftpolyol GP/GM + Polyol 1**) | 100 | 100 | 100 | 100 | 100 | 100 | 100 | 100 |
| Feststoffgehalt Mischung (Gew.-%) | 10 | 10 | 10 | 10 | 10 | 10 | 10 | 10 |
| Formulierungsänderungen | keine | keine | keine | keine | keine | keine | keine | 0,20 MT Zinnoktoat |
| **Verschäumungseigenschaften** | gut abgeblasen, ZÖV 2 | sehr gut abgeblasen, ZÖV 1 | abgeblasen, ZÖV 3 | gut abgeblasen, ZÖV 2 | gut abgeblasen, ZÖV 2 | gut abgeblasen, ZÖV 3 | gut abgeblasen, ZÖV 2 | gut abgeblasen, ZÖV 2 |

| **Schaumstoffeigenschaften** | | | | | | | | |
|---|---|---|---|---|---|---|---|---|
| Rohdichte | 22,2 | 22,2 | 22,4 | 21,8 | 22,0 | 22,0 | 22,1 | 22,2 |
| Stauchhärte | 6,4 | 6,0 | 5,4 | 5,5 | 5,7 | 5,7 | 5,6 | 6,1 |
| Zugfestigkeit | 94 | 95 | 98 | 97 | 100 | 97 | 99 | - |
| Reißdehnung | 82 | 88 | 98 | 98 | 100 | 85 | 92 | - |
| Druckverformungsrest | 3,7 | 4,0 | 3,1 | 3,7 | 3,6 | 4,7 | 4,1 | - |
| Wet Compression Set | 16,0 | 10,0 | 7,6 | 13,8 | 13,0 | - | 10,2 | 9,5 |
| Rückprallelastizität | 36 | 34 | 36 | 37 | 40 | 34 | 36 | 40 |
| Fogging (DIN) | ø 0,3 | ø 0,1 | ø 0,3 | ø 0,2 | ø 0,2 | ø 0,4 | ø 0,3 | - |

| | | | | | | | | |
|---|---|---|---|---|---|---|---|---|
| *) Rezeptur siehe Tabelle 5 | | | | | | | | |
| **) Angaben in Gewichtsteilen | | | | | | | | |

**Tabelle 11: Testung reaktiver Graftpolyole mit monomodaler und bimodaler Teilchengrößenverteilung im Blockweichschaum (Formulierung HR I bis HR III)**

| **Versuchsnummer** | **GP 1** | **GP 4** | | **GP 18** | **GM 15** | **GP 19** | **GM 14** | | **GP 21** |
|---|---|---|---|---|---|---|---|---|---|
| Feststoffgehalt GP/GM (Gew.-%) | 45,0 | 45,0 | | 45,0 | 40,0 | 45,0 | 40,2 | | 46,85 |
| Viskosität bei 25°C (mPas) | 13000 | 10420 | | 8150 | 5010 | 8100 | 5200 | | 8440 |
| Graftpolyol GP/GM + Polyol 2 **) | 100 | 100 | | 100 | : 100 | 100 | 100 | | 100 |
| Feststoffgehalt Mischung (Gew.-%) | 25 | 25 | 15 | 15 | 15 | 15 5 | 25 15 | | 25 |
| **Formulierung *)** | HRI | HR III | HR II | HR I | HR II | HR II | HR II | | HR III |
| Formulierungsänderungen | - | - | | 0,10 Sn-oktoat | - | 0,12 Sn-oktoat | - | | 0,16 Sn-oktoat |
| **Versehäumungseigenschaften** | gut abgeblasen, minimal gesetzt, ZÖV3 | bläst stark bis gut ab, minimal gesetzt; ZÖV 2...4 | | sehr gut abgeblasen, kaum gesetzt; ZÖV 1 | abgeblasen, wenig gesetzt; ZÖV 2 | gut abgeblasen, wenig gesetzt; ZÖV3 | gut abgeblasen, etwas gesetzt, ZÖV 2 | | ganz leicht abgeblasen, ZÖV 4 |

| **Schaumstoffeigenschaften** | | | | | | | | | |
|---|---|---|---|---|---|---|---|---|---|
| Rohdichte | 36,0 | 35,4 | 35,1 | 37,5 | 37,1 | 37,2 | 36,1 | 36,9 | 35,7 |
| Eindruckhärte B | 122 | 142 | 108 | 115 | 107 | 112 | 128 | 117 | 176 |
| | 169 | 200 | 147 | 162 | 152 | 155 | 176 | 165 | 240 |
| | 329 | 433 | 309 | 322 | 309 | 317 | 335 | 325 | 519 |
| SAG-Faktor | 2,7 | 3,00 | 2,86 | 2,80 | 2,89 | 2,83 | 2,62 | 2,78 | 2,95 |
| Stauchhärte | 3,1 | 5,2 | 3,8 | 2,9 | 2,9 | 3,0 | 3,3 | 3,1 | 5,7 |
| Zugfestigkeit | 123 | 135 | 128 | 122 | 125 | 123 | 152 | 121 | 135 |
| Reißdelmung | 145 | 85 | 110 | 128 | 145 | 132 | 159 | 122 | 97 |
| Druckverformungsrest | 2,0 | 3,5 | 3,4 | 4,6 | 4,8 | 4,6 | 4,3 | 3,4 | 3,4 |
| Wet Compression Set | 15,5 | 17,0 | 20,1 | 17,3 | 40,0 | 20,0 | 13,6 | 15,3 | 13,4 |
| Rückprallelastizität | 62 | 60 | 61 | 64 | 62 | 63 | 63 | 63 | 63 |
| Fogging (DIN) | ø 0,9 | ø1,1 1,8...0,6 | - | - | ø 1,1 | ø 0,7 | ø 2,1 | - | ø0,7 |
| VOC | ø375 | ø540 | - | ø260 | ø 416 | ø 300 | ø 670 | ø 313 | - |
| Fogging | ø 193 | ø 402 | - | ø 218 | ø 586 | ø 316 | ø 210 | ø 231 | - |

| | | | | | | | | | |
|---|---|---|---|---|---|---|---|---|---|
| *) Rezepturen siehe Tabelle 6 | | | | | | | | | |
| **) Angaben in Gewichtsteilen | | | | | | | | | |

### Beispiel 5.2: Ergebnisse Formschaum (Tabelle 12)

Die Graftpolyole mit erfindungsgemäßer bimodaler Verteilung (GP 18, GP 19, GP 21, GM 14, GM 15) zeigten in komplizierten Formteilen ein besseres Fließverhalten im Vergleich zum Graftpolyol GP 1 mit einer breiten Verteilung. Das führte zu weniger Lufteinschlüssen bei komplizierten Formengeometrien.

Wie schon bei den Blockweichschaumrezepturen wurde auch bei den Formweichschäumen ein stärkeres Zellöffnungsverhalten bei Einsatz der Graftpolyole mit erfindungsgemäßer bimodaler Teilchengrößenverteilung im Vergleich zum Graftpolyol GP 1 beobachtet. Aufgrund des stärkeren Zellöffnungsverhaltens konnte in den Beispielformulierungen (Tabelle 7) das Zellöffnerpolyol Polyol 3 (das sind Polyole mit deutlich erhöhtem Gehalt an Ethylenoxid-Gruppen in der Polymerkette) von 4 Anteilen (Rezeptur FW I) auf 1,8 Anteile (Rezeptur FW II) bis auf 0 Anteile (Rezeptur FW III) reduziert werden. Schäume auf Basis der Graftpolyole mit erfindungsgemäßer bimodaler Teilchengrößenverteilung unterschieden sich in den Schaumparametern nicht wesentlich von Schäumen auf Basis GP 1. Durch die Reduzierung des Zellöffneranteils konnte eine Erhöhung der Härte sowie eine leichte Verbesserung der Weiterreißfestigkeit (siehe GP 18, FW I, FW II, FW III) erreicht werden (Tabelle 12). Sowohl beim Schäumverhalten als auch bei den Schaumeigenschaften konnten keine signifikanten Unterschiede zwischen Graftpolyolen festgestellt werden, deren bimodale Teilchengrößenverteilung durch Mischen von Graftpolyolen mit monomodaler Verteilung (GM 15) oder durch Synthese (GP 18, GP 19) erhalten wurde.

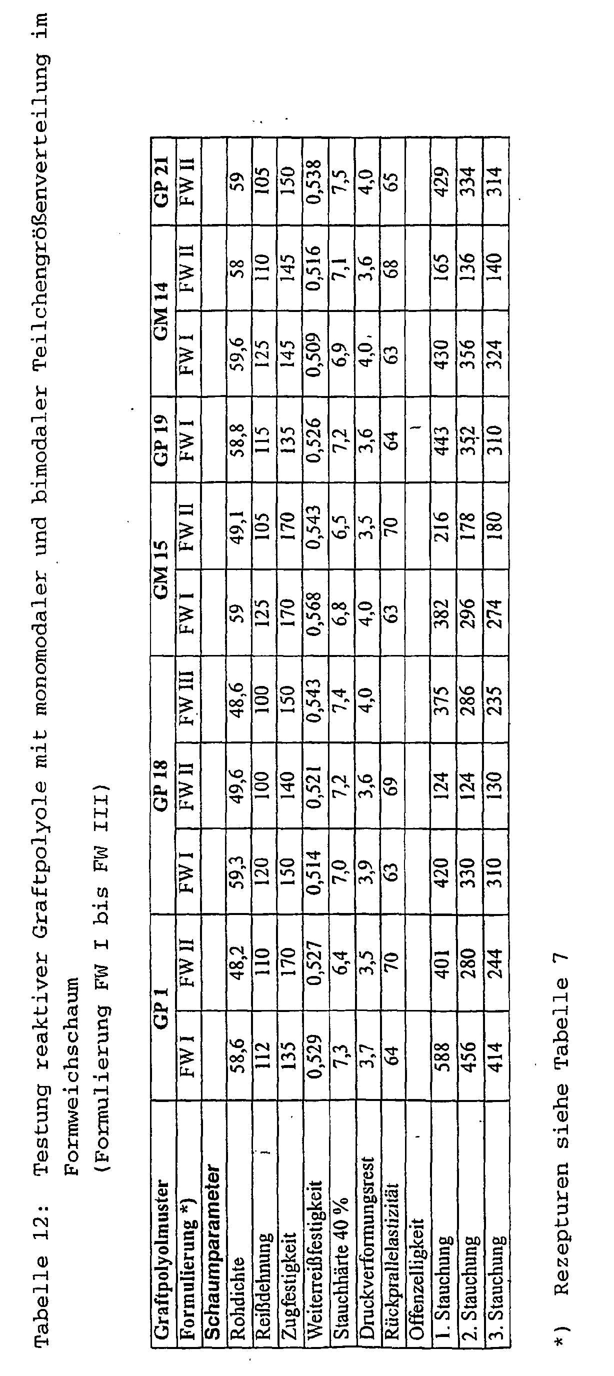

## Patentansprüche

1. Graftpolyole mit bimodaler-Teilchengrößenvärteilung und einem Gesamtfeststoffgehalt von 5 bis 65 Gew.-%, enthaltend kleine Teilchen mit einem Teilchendurchmesser von 0,05 bis 0,7 µm und große Teilchen mit einem Teilchendurchmesser von 0,4 bis 5,0 µm, wobei sich die bei der Darstellung mit der Methode der Fraunhofer-Beugung in Verbindung mit Polarization Intensity Differential Scattering gemessenen Peaks der großen und kleinen Teilchen nicht überlappen, und einen Gesamtgehalt der Feststoffe mit den definierten Teilchengrößen, bestehend aus einem Volumenanteil von 5 bis 45 % kleinen Teilchen und einem Volumenanteil von 95 bis 55 % großen Teilchen, wobei diese Volumenanteile sich zu 100 % ergänzen.

2. Graftpolyole gemäß Anspruch 1, **dadurch gekennzeichnet, dass** sie kleine Teilchen, die **gekennzeichnet sind durch** einen Peak, der beginnt in einem Bereich von 0,05 bis 0,08 µm und endet in einem Bereich von 0,4 bis 0,7 µm, und große Teilchen, die **gekennzeichnet sind durch** einen Peak, der beginnt in einem Bereich von 0,4 bis 1,0 µm und endet in einem Bereich von 1,2 bis 5,0 µm, jeweils dargestellt mit der Methode der Fraunhofer-Beugung in Verbindung mit Polarization Intensity Differential Scattering, enthalten, wobei die gemessenen Peaks sich nicht überlappen.

3. Graftpolyole gemäß Anspruch 1 oder 2, **dadurch gekennzeichnet., dass** sie eine um mindestens 5 % geringere Viskosität bei 25°C im Vergleich zu einem Graftpolyol mit monomodaler Teilchengrößenverteilung und ausschließlich kleinen oder großen Teilchen aufweisen, unter der Voraussetzung dass sich die zu vergleichenden Graftpolyole nicht im Feststoffgehalt und in den Einsatzstoffen unterscheiden.

4. Graftpolyole gemäß einem der Ansprüche 1 bis 3, **dadurch gekennzeichnet, dass** die kleinen Teilchen einen Teilchendurchmesser von 0,1 bis 0,5 µm und die großen Teilchen einen Teilchendurchmesser von 0,5 bis 4,0 µm aufweisen.

5. Graftpolyole gemäß einem der Ansprüche 1 bis 4, **dadurch gekennzeichnet, dass** der Gesamtfeststoffgehalt des Graftpolyols 10 bis 50 Gew.-% beträgt.

6. Graftpolyole gemäß einem der Ansprüche 1 bis 5, **dadurch gekennzeichnet, dass** der Gesamtgehalt der Feststoffe mit den definierten Teilchengrößen aus einem Volumenanteil von 10 bis 40 % kleinen Teilchen und einem Volumenanteil von 90 bis 60 % großen Teilchen besteht, wobei diese Volumenanteile sich zu 100 % ergänzen.

7. Verfahren zur Herstellung von Graftpolyolen mit bimodaler Teilchengrößenverteilung entsprechend Anspruch 1, **dadurch gekennzeichnet, dass** mindestens ein Graftpolyol mit mono-modaler Teilchengrößenverteilung mit kleinen Teilchen, die einen Teilchendurchmesser von 0,05 bis 0,7 µm aufweisen, und mindestens ein Graftpolyol mit monomodaler Teilchengrößenverteilung mit großen Teilchen, die einen Teilchendurchmesser von 0,4 bis 5,0 µm aufweisen, in einem solchen Verhältnis miteinander gemischt werden; dass der Gesamtfeststoffgehalt des entstandenen Graftpolyols mit bimodaler Teilchengrößenverteilung aus einem Volumenanteil von 5 bis 45 % kleinen Teilchen und einem Volumenanteil von 95 bis 55 % großen Teilchen besteht, wobei sich die Volumenanteile zu 100 % ergänzen.

8. Verfahren gemäß Anspruch 7, **dadurch gekennzeichnet, dass** als Graftpolyole mit monomodaler Teilchengrößenverteilung mit kleinen Teilchen solche mit einem Teilchendurchmesser von 0,1 bis 0,5 µm eingesetzt werden.

9. Verfahren gemäß Anspruch 7 oder 8, **dadurch gekennzeichnet, dass** als Graftpolyole mit monomodaler Teilchengrößenverteilung mit großen Teilchen solche mit einem Teilchendurchmesser von 0,5 bis 4,0 µm eingesetzt werden.

10. Verfahren gemäß einem der Ansprüche 7 bis 9, **dadurch gekennzeichnet, dass** das Graftpolyol mit monomodaler Teilchengrößenverteilung mit kleinen Teilchen in einem Volumenanteil von 10 bis 40 % und das Graftpolyol mit monomodaler Teilchengrößenverteilung mit großen Teilchen in einem Volumenanteil von 90 bis 60 % eingesetzt werden, wobei diese Volumenanteile sich zu 100 % ergänzen.

11. Verfahren zur Herstellung von Graftpolyolen mit bimodaler Teilchengrößenverteilung entsprechend Anspruch 1 in einem Semi Batch Verfahren, **dadurch gekennzeichnet, dass** die Reaktionsvorlage jeweils mindestens ein Trägerpolyol, ein Makromer und ein Graftpolyol mit monomodaler Teilchengrößenverteilung enthält, wobei der Feststoffgehalt im resultierenden Graftpolyol zu mehr als 3 Gew.-% aus dem Festststoffgehalt des in der Reaktionsvorlage eingesetzten Graftpolyols mit monomodaler Teilchengrößenverteilung besteht, und das Gewicht des in der Reaktionsvorlage eingesetzten Makromers, bezogen auf das Gesamtgewicht der eingesetzten ethylenisch ungesättigten Monomere, 1 bis 30 Gew.-% beträgt, jedoch mindestens so groß ist, dass im weiteren Reaktionsverlauf kleine Teilchen gebildet werden.

12. Verfahren gemäß Anspruch 11, **dadurch gekennzeichnet, dass** die in der Reaktionsvorlage eingesetzte Makromermenge, bezogen auf die Menge der eingesetzten ethylenisch ungesättigten Monomere des resultierenden Graftpolyols, 2 bis 15 Gew.-% beträgt.

13. Verfahren gemäß Anspruch 11 oder 12, **dadurch gekennzeichnet, dass** das Makromer ein Polyol mit einem mittleren Molekulargewicht von mehr als 2000 g/mol und einer Funktionalität ≥ 2 ist, welches mindestens eine endständige, polymerisationsfähige, ethylenisch ungesättigte Gruppe besitzt.

14. Verfahren gemäß Anspruch 13, **dadurch gekennzeichnet, dass** das Makromer ein Polyol mit einem mittleren Molekulargewicht von mehr als 3000 g/mol ist.

15. Verwendung der Graftpolyole gemäß einem der Ansprüche 1 bis 6 zur Herstellung von Polyurethanen.

16. Verfahren zur Herstellung von Polyurethanen durch Umsetzung von organischen und/oder modifizierten organischen Polyisocyanaten (a) mit Graftpolyolen (b) und gegebenenfalls weiteren gegenüber Isocyanaten reaktive Wasserstoffatome aufweisenden Verbindungen (c) in Gegenwart von Katalysatoren (d), gegebenenfalls Wasser und/oder anderen Treibmitteln (e) und gegebenenfalls weiteren Hilfs- und Zusatzstoffen (f), **dadurch gekennzeichnet, dass** als Graftpolyole (b) solche mit einer bimodalen Teilchengrößenverteilung und einem Gesamtfeststoffgehalt von 5 bis 65 Gew.-%, enthaltend kleine Teilchen mit einem Teilchendurchmesser von 0,05 bis 0,7 µm und große Teilchen mit einem Teilchendurchmesser von 0,4 bis 5,0 µm, wobei sich die bei der Darstellung mit der Methode der Lichtstreuungsuntersuchung gemessenen Peaks der großen und kleinen Teilchen nicht überlappen, und einen Gesamtgehalt der Feststoffe mit den definierten Teilchengrößen, bestehend aus einem Volumenanteil von 5 bis 45 % kleinen Teilchen und einem Volumenanteil von 95 bis 55 % großen Teilchen, wobei diese Volumenanteile sich zu 100 % ergänzen, eingesetzt werden.

## Claims

1. A graft polyol having a bimodal particle size distribution and a total solids content of from 5 to 65% by weight, comprising small particles having a particle diameter of from 0.05 to 0.7 µm and large particles having a particle diameter of 0.4 to 5.0 µm, the peaks of the large and small particles measured by the Fraunhofer diffraction method in combination with polarization intensity differential scattering not overlapping, and a total content of the solids having the defined particle sizes consisting of a volume fraction of from 5 to 45% of small particles and a volume fraction of from 95 to 55% of large particles, these volume fractions summing to 100%.

2. The graft polyol according to claim 1, which comprises small particles, which are **characterized by** a peak which begins in a range of from 0.05 to 0.08 µm and ends in a range of from 0.4 to 0.7 µm and large particles which are **characterized by** a peak which begins in a range of from 0.4 to 1.0 µm and ends in a range of from 1.2 to 5.0 µm, measured in each case by the Fraunhofer diffraction method in combination with polarization intensity differential scattering, the measured peaks not overlapping.

3. The graft polyol according to claim 1 or 2, which has a viscosity at 25°C which is at least 5% lower than a graft polyol having a monomodal particle size distribution and exclusively small or large particles, assuming that the graft polyols to be compared do not differ in solids content and in the starting materials.

4. The graft polyol according to any of claims 1 to 3, wherein the small particles have a diameter of from 0.1 to 0.5 µm and the large particles have a diameter of from 0.5 to 4.0 µm.

5. The graft polyol according to any of claims 1 to 4, wherein the total solids content of the graft polyol is from 10 to 50% by weight.

6. The graft polyol according to any of claims 1 to 5, wherein the total content of the solids having the defined particle sizes consists of a volume fraction of from 10 to 40% by weight of small particles and a volume fraction of from 90 to 60% by weight of large particles, these volume fractions summing to 100%.

7. A process for the preparation of graft polyols having a bimodal particle size distribution according to claim 1, wherein at least one graft polyol having a monomodal particle size distribution with small particles which have a diameter of from 0.05 to 0.7 µm and at least one graft polyol having a monomodal particle size distribution with large particles which have a diameter of from 0.4 to 5.0 µm are mixed with one another in a ratio such that the total solids content of the resulting graft polyol having a bimodal particle size distribution consists of a volume fraction of from 5 to 45% of small particles and a volume fraction of from 95 to 55% of large particles, the volume fractions summing to 100%.

8. The process according to claim 7, wherein the graft polyol having a monomodal particle size distribution with small particles which is used is one having a particle diameter of from 0.1 to 0.5 µm.

9. The process according to claim 7 or 8, wherein the graft polyol having a monomodal particle size distribution of large particles which is used is one having a particle diameter of from 0.5 to 4.0 µm

10. The process according to any of claims 7 to 9, wherein the graft polyol having a monomodal particle size distribution with small particles is used in a volume fraction of from 10 to 40% and the graft polyol having a monomodal particle size distribution of large particles is used in a volume fraction of from 90 to 60%, these volume fractions summing to 100%.

11. A process for the preparation of a graft polyol having a bimodal particle size distribution according to claim 1 in a semibatch process, wherein the initially taken reaction mixture comprises in each case at least one carrier polyol, a macromer and a graft polyol having a monomodal particle size distribution, more than 3% by weight of the solids content in the resulting graft polyol consisting of the solids content of the graft polyol used in the initially taken reaction mixture and having a monomodal particle size distribution, and the weight of the macromer used in the initially taken reaction mixture is from 1 to 30% by weight, based on the total weight of the ethylenically unsaturated monomers used, which is at least sufficiently large that small particles are formed in the further course of the reaction.

12. The process according to claim 11, wherein the amount of macromer used in the initially taken reaction mixture is from 2 to 15% by weight, based on the amount of the ethylenically unsaturated monomers used for the resulting graft polyol.

13. The process according to claim 11 or 12, wherein the macromer is a polyol having an average molecular weight of more than 2 000 g/mol and a functionality of ≥2, which possesses at least one terminal, polymerizable, ethylenically unsaturated group.

14. The process according to claim 13, wherein the macromer is a polyol having an average molecular weight of more than 3 000 g/mol.

15. The use of a graft polyol according to any of claims 1 to 6 for the preparation of polyurethanes.

16. A process for the preparation of polyurethanes by reacting organic and/or modified organic polyisocyanates (a) with graft polyols (b) and, if appropriate, further compounds (c) having hydrogen atoms reactive toward isocyanates, in the presence of catalysts (d), if appropriate water and/or other blowing agents (e) and, if appropriate, further assistants and additives (f), wherein the graft polyols (b) used are those having a bimodal particle size distribution and a total solids content of from 5 to 65% by weight, comprising small particles having a diameter of from 0.05 to 0.7 µm and large particles having a diameter of from 0.4 to 5.0 µm, the peaks of the large and small particles measured by the light scattering method not overlapping, and a total content of solids having the defined particle sizes consisting of a volume fraction of from 5 to 45% of small particles and a volume fraction of from 95 to 55% of large particles, these volume fractions summing to 100%.

## Revendications

1. Polyols greffés présentant une répartition granulométrique bimodale et une teneur globale en matière solide de 5 à 65 % en poids, contenant de petites particules ayant un diamètre de 0,05 à 0,7 *µ*m et de grandes particules ayant un diamètre de 0,4 à 5,0 *µ*m, les pics des grandes et petites particules, mesurés lors de la représentation avec la méthode de diffraction de Fraunhofer en combinaison avec un Polarization Intensity Differential Scattering, ne se recouvrant pas, et une teneur globale en matière solide présentant les granulométries définies, constituée d'une fraction en volume de 5 à 45 % de petites particules et d'une fraction en volume de 95 à 55 % de grandes particules, ces fractions volumiques se complétant à 100 %.

2. Polyols greffés suivant la revendication 1, **caractérisés en ce qu'**ils contiennent des petites particules qui sont **caractérisées par** un pic qui commence dans une gamme de 0,05 à 0,08 µm et se termine dans une gamme de 0,4 à 0,7 µm, et de grandes particules qui sont **caractérisées par** un pic qui commence dans une gamme de 0,4 à 1,0 *µ*m et se termine dans une gamme de 1,2 à 5,0 *µ*m, chacun représenté par la méthode de diffraction de Fraunhofer en combinaison avec un Polarization Intensity Differential Scattering, les pics mesurés ne se recouvrant pas.

3. Polyols greffés suivant la revendication 1 ou 2, **caractérisés en ce qu'**ils présentent une viscosité à 25°C plus faible d'au moins 5 % en comparaison d'un polyol greffé présentant une répartition granulométrique monomodale et des particules exclusivement petites ou grandes, à la condition que les polyols greffés à comparer ne se différencient pas dans la teneur en matière solide et dans les matières mises en oeuvre.

4. Polyols greffés suivant l'une des revendications 1 à 3, **caractérisés en ce que** les petites particules présentent un diamètre de 0,1 à 0,5 µm et les grandes particules un diamètre de 0,5 à 4,0 µm.

5. Polyols greffés suivant l'une des revendications 1 à 4, **caractérisés en ce que** la teneur globale en matière solide du polyol greffé est de 10 à 50 % en poids.

6. Polyols greffés suivant l'une des revendications 1 à 5, **caractérisés en ce que** la teneur globale en matière solide présentant les granulométries définies est constituée d'une fraction en volume de 10 à 40 % de petites particules et d'une fraction en volume de 90 à 60 % de grandes particules, ces fractions en volume se complétant à 100 %.

7. Procédé de préparation de polyols greffés présentant une répartition granulométrique bimodale correspondant à la revendication 1, **caractérisé en ce qu'**au moins un polyol greffé présentant une répartition granulométrique monomodale à petites particules, qui présentent un diamètre de 0,05 à 0,7 µm, et au moins un polyol greffé présentant une répartition granulométrique monomodale à grandes particules, qui présentent un diamètre de 0,4 à 5,0 *µ*m, sont mélangés dans un rapport tel que la teneur globale en matière solide du polyol greffé, à répartition granulométrique bimodale, obtenu est constituée pour une fraction volumique de 5 à 45 % de petites particules et pour une fraction volumique de 95 à 55 % de grandes particules, les fractions volumiques se complétant à 100 %.

8. Procédé suivant la revendication 7, **caractérisé en ce que**, comme polyols greffés présentant une répartition granulométrique monomodale à petites particules, on met en oeuvre ceux ayant un diamètre de particules de 0,1 à 0,5 *µ*m.

9. Procédé suivant la revendication 7 ou 8, **caractérisé en ce que**, comme polyols greffés présentant une répartition granulométrique monomodale à grandes particules, on met en oeuvre ceux présentant un diamètre de particules de 0,5 à 4,0 µm.

10. Procédé suivant l'une des revendications 7 à 9, **caractérisé en ce que** le polyol greffé présentant une répartition granulométrique monomodale à petites particules est mis en oeuvre dans une fraction en volume de 10 à 40 % et le polyol greffé présentant une répartition granulométrique monomodale à grandes particules est mis en oeuvre dans une fraction en volume de 90 à 60 %, ces fractions volumiques se complétant à 100 %.

11. Procédé de préparation de polyols greffés à répartition granulométrique bimodale suivant la revendication 1, dans un procédé semi-continu, **caractérisé en ce que** le récipient réactionnel contient respectivement au moins un polyol de support, un macromère et un polyol greffé présentant une répartition granulométrique monomodale, la teneur en matière solide dans le polyol greffé résultant étant constituée pour plus de 3 % en poids de la teneur en matière solide du polyol greffé mis en oeuvre dans le récipient réactionnel et présentant une répartition granulométrique monomodale, et le poids du macromère mis en oeuvre dans le récipient réactionnel, par rapport au poids total des monomères éthyléniquement insaturés mis en oeuvre, s'élevant à 1 jusqu'à 30 % en poids, mais étant au moins suffisamment grand pour que de petites particules soient formées dans le cours ultérieur de la réaction.

12. Procédé suivant la revendication 11, **caractérisé en ce que** la quantité de macromère mise en oeuvre dans le récipient réactionnel, par rapport à la quantité des monomères éthyléniquement insaturés mis en oeuvre du polyol greffé résultant, est de 2 à 15 % en poids.

13. Procédé suivant la revendication 11 ou 12, **caractérisé en ce que** le macromère est un polyol présentant un poids moléculaire moyen de plus de 2 000 g/mole et une fonctionnalité > 2, qui possède au moins un groupe éthyléniquement insaturé, polymérisable, terminal.

14. Procédé suivant la revendication 13, **caractérisé en ce que** le macromère est un polyol présentant un poids moléculaire moyen supérieur à 3 000 g/mole.

15. Utilisation des polyols greffés suivant l'une des revendications 1 à 6, pour la production de polyuréthannes.

16. Procédé de préparation de polyuréthannes par réaction de polyisocyanates organiques et/ou organiques modifiés (a) avec des polyols greffés (b) et éventuellement d'autres composés (c) présentant des atomes d'hydrogène réactifs vis-à-vis des isocyanates, en présence de catalyseurs (d), éventuellement d'eau et/ou d'autres agents gonflants (e) et éventuellement d'autres substances auxiliaires et additifs (f), **caractérisé en ce que**, comme polyols greffés (b), on met en oeuvre ceux présentant une répartition granulométrique bimodale et une teneur globale en matière solide de 5 à 65 % en poids, contenant de petites particules ayant un diamètre de 0,05 à 0,7 *µ*m et de grandes particules ayant un diamètre de 0,4 à 5,0 *µ*m, les pics des grandes et petites particules mesurés lors de la représentation avec la méthode d'examen de dispersion de la lumière ne se recouvrant pas, et une teneur globale en matière solide présentant les granulométries définies, constituée d'une fraction en volume de 5 à 45 % de petites particules et d'une fraction en volume de 95 à 55 % de grandes particules, ces fractions volumiques se complétant à 100 %.
